(19) Europäisches Patentamt
European Patent Office
Office européen des brevets

(11) **EP 4 738 797 A1**

(12) **EUROPEAN PATENT APPLICATION**
published in accordance with Art. 153(4) EPC

(43) Date of publication:
**06.05.2026 Bulletin 2026/19**

(21) Application number: **24844204.8**

(22) Date of filing: **18.02.2024**

(51) International Patent Classification (IPC):
*H04L 67/51* *(2022.01)*

(52) Cooperative Patent Classification (CPC):
**H04L 1/22; H04L 41/0663; H04L 67/10; H04L 67/51**

(86) International application number:
**PCT/CN2024/077469**

(87) International publication number:
**WO 2025/020505 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.07.2023   CN 202310911636**
**17.11.2023   CN 202311541864**

(71) Applicant: **Huawei Cloud Computing Technologies Co., Ltd.**
**Guiyang, Guizhou, 550025 (CN)**

(72) Inventors:
• **WU, Zhenhua**
**Guiyang, Guizhou 550025 (CN)**
• **WANG, Baolin**
**Guiyang, Guizhou 550025 (CN)**
• **XU, Wenchang**
**Guiyang, Guizhou 550025 (CN)**
• **ZHU, Yelong**
**Guiyang, Guizhou 550025 (CN)**

(74) Representative: **Maiwald GmbH**
**Engineering**
**Elisenhof**
**Elisenstrasse 3**
**80335 München (DE)**

(54) **SERVICE DEPLOYMENT METHOD, CLOUD MANAGEMENT PLATFORM, AND RELATED DEVICE**

(57)   This application belongs to the field of cloud computing technologies, and discloses a service deployment method, a cloud management platform, and a related apparatus. The method includes: providing a configuration interface, obtaining service configuration information from the configuration interface, determining a resource deployment policy of a target service based on the service configuration information and a number of service copies, and deploying the target service on a plurality of service units according to the resource deployment policy, where the resource deployment policy indicates that one service unit bears at least one user group of a tenant, every $Rf$ service units bear service copies of a same user group, and $Rf$ is the number of service copies. For any user in any user group, even if a service unit that bears the user is faulty, the user can alternatively obtain a corresponding service from another service unit. In this way, a redundancy capability of the target service is effectively improved.

FIG. 4

- Provide a configuration interface — 401
- Obtain service configuration information of a target service from the configuration interface — 402
- Determine a resource deployment policy of the target service based on the service configuration information and a number of service copies of the target service, and deploy the target service on a plurality of service units according to the resource deployment policy — 403

**Description**

This application claims priorities to Chinese Patent Application No. 202310911636.0, filed on July 24, 2023 and entitled "ARCHITECTURE DIVISION METHOD, APPARATUS, AND SYSTEM", and to Chinese Patent Application No. 202311541864.X, filed on November 17, 2023 and entitled "SERVICE DEPLOYMENT METHOD, CLOUD MANAGEMENT PLATFORM, AND RELATED APPARATUS", both of which are incorporated herein by reference in their entireties.

**TECHNICAL FIELD**

This application relates to the field of cloud computing technologies, and in particular, to a service deployment method, a cloud management platform, and a related apparatus.

**BACKGROUND**

With the continuous development of information technologies, especially the internet technologies, large-scale governments, enterprises, and financial institutions start to build own data centers step by step to satisfy service requirements of the large-scale governments, enterprises, and financial institutions for resources. The cost of building a data center by simply adding physical devices is extremely high. Therefore, cloud computing emerges. A cloud service provider can construct a cloud platform by using a cloud computing technology, where the cloud platform includes a cloud management platform and a cloud infrastructure, the cloud management platform is configured to manage the cloud infrastructure, the cloud infrastructure includes at least one cloud data center, and a tenant can deploy a corresponding service in the at least one cloud data center.

In a related technology, to ensure service availability, the tenant needs to deploy, in the at least one cloud data center, a plurality of service units that are independent of each other and that have a same service function, and each service unit has a complete service function. In this way, after a service request is received, the service request is routed, according to a specified rule, to a corresponding service unit for processing. For example, a service request of a user is routed, based on a correspondence between the user served by a service and a service unit, to the corresponding service unit for processing.

However, one service unit may correspond to a plurality of users. If the service unit is faulty due to reasons such as overload or a distributed denial of service (Distributed Denial of Service, DDoS) attack, the plurality of users corresponding to the service unit cannot use a service, and a redundancy capability of the service is poor.

**SUMMARY**

This application provides a service deployment method, a cloud management platform, and a related apparatus, to resolve a problem of a poor redundancy capability of a service in a related technology. The technical solutions are as follows.

According to a first aspect, a service deployment method is provided, applied to a cloud management platform, where the cloud management platform is configured to manage a cloud infrastructure, the cloud infrastructure includes at least one cloud data center, a plurality of service units are deployed in the at least one cloud data center, and the method includes:

providing a configuration interface, where the configuration interface indicates a tenant to enter service configuration information of a to-be-deployed target service, and the service configuration information is used to configure the target service; obtaining the service configuration information from the configuration interface; and determining a resource deployment policy of the target service based on the service configuration information and a number of service copies, and deploying the target service on the plurality of service units according to the resource deployment policy, where the resource deployment policy indicates that one service unit bears at least one user group of the tenant, every $Rf$ service units bear service copies of a same user group, $Rf$ is the number of service copies, and $Rf \geq 2$.

In this application, the resource deployment policy of the target service can be determined based on the service configuration information and the number of service copies that are of the target service and that are entered by the tenant, and then the target service is deployed on the plurality of service units according to the resource deployment policy. The number of service copies is greater than or equal to 2, the resource deployment policy indicates that the service unit bears the at least one user group of the tenant, every $Rf$ service units bear the service copies of the same user group, and $Rf$ is the number of service copies. In other words, the service unit can provide a service for the at least one user group of the tenant, and each user group can be borne by at least two service units. In this case, for any user in any user group, even if a service unit that bears the user is faulty, the user can alternatively obtain a corresponding service from another service unit. In comparison with a method in which users served by a service unit cannot normally obtain a service because the service unit is faulty, according to the method provided in this application, a redundancy capability of the target service can be effectively improved.

The cloud management platform can indicate, by providing the configuration interface, the tenant to enter the service configuration information of the to-be-deployed target service, so that the tenant can enter the service configuration information of the target service on the configuration interface.

Optionally, the service configuration information includes one or more of the following: a minimum number of startup nodes of a microservice, a minimum startup specification of the microservice, a maximum number of resources, a service performance parameter, a maximum explosion radius, or a performance baseline of the microservice; and the maximum number of resources indicates an upper limit of resources occupiable by the target service, the service performance parameter indicates a lower limit of performance of the target service, the maximum explosion radius indicates a lower limit of the redundancy capability of the target service, and the performance baseline indicates a correspondence between a performance parameter and each of a startup specification and a number of startup nodes of the microservice.

Optionally, the configuration interface further indicates the tenant to enter the number of service copies, so that the tenant can enter the number of service copies on the configuration interface. For any user group of the tenant, the number of service copies is a number of service units that are expected by the tenant and that bear the user group, and the number of service copies is greater than or equal to 2.

In this application, the service unit can provide the service for the at least one user group of the tenant, and each user group is borne by at least two service units. In this case, for any user in any user group, even if a service unit that bears the user is faulty, the user can alternatively obtain a corresponding service from another service unit. In comparison with the method in which the user served by the service unit cannot normally obtain the service because the service unit is faulty, according to the method provided in this application, the redundancy capability of the target service can be effectively improved.

Optionally, the resource deployment policy indicates that $Rf$ service copies of the user group are respectively deployed on independent service units, and every $Rf$ service units bear service copies of at most one same user group.

That every $Rf$ service units bear the service copies of the at most one same user group may also be understood as that only service copies corresponding to a same user group are deployed on any $Rf$ service units.

Because every $Rf$ service units bear the service copies of the at most one same user group, for any user group of the tenant, if any service unit that bears the user group is faulty, the user group can alternatively obtain a corresponding service from another service unit. The user group cannot obtain a service only when all service units that bear the user group are faulty. In this case, normal running of the target service is affected. However, because other user groups borne by the service unit that bears the user group are further borne by another service unit, even if all the service units that bear the user group are faulty, the other user groups can alternatively obtain services from the another service unit.

Optionally, the resource deployment policy includes a number of the service units used to provide the target service and a deployment specification of the service units, and the service units used to provide the target service have a same specification and same performance. In this case, an implementation process of determining the resource deployment policy of the target service based on the service configuration information and the number of service copies includes: determining, based on the service configuration information, the number of service copies of the target service, and a resource deployment constraint condition, the number of the service units used to provide the target service and the deployment specification of the service units.

The resource deployment constraint condition includes one or more of the following: the minimum number of startup nodes of the microservice, the minimum startup specification of the microservice, the maximum number of resources, the service performance parameter, the maximum explosion radius, the number of service copies, or the performance baseline of the microservice; and the maximum number of resources indicates the upper limit of the resources occupiable by the target service, the service performance parameter indicates the lower limit of the performance of the target service, the maximum explosion radius indicates the lower limit of the redundancy capability of the target service, and the performance baseline indicates the correspondence between the performance parameter and each of the startup specification and the number of startup nodes of the microservice.

The maximum number of resources indicates the upper limit of the resources occupiable by the target service, the service performance parameter indicates the lower limit of the performance of the target service, and the maximum explosion radius indicates the lower limit of the redundancy capability of the target service. Therefore, based on the resource deployment constraint condition, it can be ensured that resources occupied by the target service does not exceed the maximum number of resources, the performance of the target service is not lower than the service performance parameter, and the redundancy capability of the target service is better than or equal to the redundancy capability indicated by the maximum explosion radius. In other words, in this application, under the constraint of the resource deployment constraint condition, the determined resource deployment policy of the target service can consider service performance, the redundancy capability, and resource costs of the target service, so that the target service can have a smaller explosion radius and better performance in comparison with a related technology when the maximum number of resources remains unchanged.

Optionally, a plurality of candidate resource deployment policies are determined based on the service configuration information, the number of service copies of the target service, and the resource deployment constraint condition, where the candidate resource deployment policy includes a candidate number of service units and a candidate deployment specification of the service units. A candidate resource deployment policy is selected from the plurality of candidate resource deployment policies, and a candidate number and a candidate deployment specification that are of service units and that are included in the selected candidate resource deployment policy are used as the number and the deployment specification that are of the service units and that are included in the resource deployment policy of the target service.

Optionally, the candidate deployment specification includes a number of startup nodes and a startup specification that respectively correspond to at least one microservice that is in the service units and that is used to provide the target service, and the resource deployment constraint condition satisfies the following inequality:

$$\begin{cases} \min num_i \leq num_i \\ \min s_i \leq s_i \\ s_i num_i \leq S \\ \sum_{i=1}^{n} s_i num_i \leq \dfrac{S}{N} \\ \min t(j) \geq \dfrac{T}{N} \\ B \geq \dfrac{1}{C_N^{Rf}} \end{cases} \qquad num_i \in X_i, s_i \in X_i, j \in 1, \dots, n$$

In the foregoing inequality, $i$ indicates an $i^{th}$ microservice, $\min num_i$ indicates a minimum number of startup nodes of the $i^{th}$ microservice, $num_i$ indicates a number of startup nodes of the $i^{th}$ microservice in the candidate deployment specification, $\min s_i$ indicates a minimum startup specification of the $i^{th}$ microservice, $s_i$ indicates a startup specification of the $i^{th}$ microservice in the candidate deployment specification, $S$ indicates the maximum number of resources, $n$ indicates a number of the at least one microservice in the service units, $N$ indicates the candidate number of the service units, $\min t(j)$ indicates a minimum performance parameter corresponding to a startup specification and a number of startup nodes of a $j^{th}$ microservice in the candidate deployment specification, $T$ indicates the service performance parameter, $B$ indicates the maximum explosion radius, $Rf$ indicates the number of service copies, and $X_i$ indicates a performance baseline of the $i^{th}$ microservice.

When a startup specification of a microservice includes a compute resource specification, a memory resource specification, and a hard disk resource specification, a minimum startup specification includes a minimum compute resource specification, a minimum memory resource specification, and a minimum hard disk resource specification, and the maximum number of resources includes a maximum number of compute resources, a maximum number of memory resources, and a maximum number of hard disk resources, in the foregoing inequality, $\min s_i \leq s_i$ indicates that a minimum compute resource specification of the $i^{th}$ microservice is less than or equal to a compute resource specification of the $i^{th}$ microservice in the candidate deployment specification, a minimum memory resource specification of the $i^{th}$ microservice is less than or equal to a memory resource specification of the $i^{th}$ microservice in the candidate deployment specification, and a minimum hard disk resource specification of the $i^{th}$ microservice is less than or equal to a hard disk resource specification of the $i^{th}$ microservice in the candidate deployment specification.

Similarly, in the foregoing inequality, $s_i num_i \leq S$ indicates that a product of the compute resource specification of the $i^{th}$ microservice in the candidate deployment specification and the number of startup nodes of the $i^{th}$ microservice is less than or equal to the maximum number of compute resources, a product of the memory resource specification of the $i^{th}$ microservice in the candidate deployment specification and the number of startup nodes of the $i^{th}$ microservice is less than or equal to the maximum number of memory resources, and a product of the hard disk resource specification of the $i^{th}$ microservice in the candidate deployment specification and the number of startup nodes of the $i^{th}$ microservice is less than or equal to the maximum number of hard disk resources.

For any candidate deployment specification, the candidate deployment specification includes a number of startup nodes and a startup specification that correspond to each microservice in the service units. Because there is a correspondence between a performance parameter and each of a startup specification and a number of startup nodes of the microservice, each microservice further corresponds to a corresponding performance parameter. For the service units, performance of the service units is actually determined by microservices with minimum performance parameters in the service units. Therefore, if the performance parameters of all the microservices with the minimum performance parameters in the service units are greater than or equal to $T/N$, it can be ensured that a sum of the performance of the N service units (that is, the performance of the target service) is not lower than the service performance parameter ($T$).

It should be noted that the number of service copies is not greater than the number of the service units.

Optionally, the service configuration information includes an explosion radius weight and a resource weight. In this case, the candidate resource deployment policy may be selected from the plurality of candidate resource deployment policies based on the explosion radius weight and the resource weight.

Optionally, a $q^{th}$ candidate resource deployment policy may be selected from the plurality of candidate resource deployment policies as the resource deployment policy of the target service based on the explosion radius weight and the resource weight. The $q^{th}$ candidate resource deployment policy satisfies the following formulas (1) to (3):

$$\min(\alpha_1 A_q + \alpha_2 R_q) \quad q \in 1, \dots, z \quad (1)$$

$$A_q = f\left( qN \sum_{i=1}^{n} s_{qi} num_{qi} \right) \quad (2)$$

$$R_q = \frac{1}{C_{qN}^{Rf}} \quad (3)$$

In the foregoing formulas (1) to (3), min() indicates taking a minimum value in the bracket, $\alpha_1$ indicates the resource weight, $\alpha_2$ indicates the explosion radius weight, z indicates a number of candidate resource deployment policies, and $q$ indicates the $q^{th}$ candidate resource deployment policy in the plurality of candidate resource deployment policies. $f(\,)$ indicates normalization of the number in the bracket, $q^N$ indicates a candidate number of service units in the $q^{th}$ candidate resource deployment policy, $s_{qi}$ indicates a startup specification of the $i^{th}$ microservice in the $q^{th}$ candidate resource deployment policy, $num_{qi}$ indicates a number of startup nodes of the $i^{th}$ microservice in the $q^{th}$ candidate resource deployment policy, $n$ indicates the number of the at least one microservice in the service units, and $Rf$ indicates the number of service copies.

In actual application, after the resource deployment policy of the target service is determined based on the service configuration information and the number of service copies of the target service, the cloud management platform can further display a service deployment suggestion interface, where the service deployment suggestion interface is used to display the resource deployment policy of the target service.

Optionally, the service deployment suggestion interface is further used to display at least one of a resource consumption status and an actual explosion radius, the resource consumption status indicates a number of resources occupied by the resource deployment policy of the target service, and the actual explosion radius indicates the redundancy capability of the target service deployed according to the resource deployment policy of the target service.

Optionally, the service deployment suggestion interface further indicates the tenant to trigger a service deployment request. Before deploying the target service on the plurality of service units according to the resource deployment policy, the cloud management platform can further receive the service deployment request, where the service deployment request indicates the cloud management platform to deploy the target service according to the resource deployment policy displayed on the service deployment suggestion interface.

In other words, after the resource deployment policy of the target service is displayed, the tenant can further trigger the service deployment request on the service deployment suggestion interface, and the cloud management platform can further receive the service deployment request triggered by the tenant, to deploy the target service on the plurality of service units according to the resource deployment policy.

In actual application, the service configuration information further includes user feature information. In this case, the cloud management platform can alternatively obtain the user feature information, where the user feature information is feature information of a plurality of users in user groups of the tenant, the feature information includes risk feature information, and the risk feature information indicates a feature that easily causes a service fault; determine at least one risky user from the plurality of users based on the risk feature information of the plurality of users; group the at least one risky user to obtain a risky user group to which the at least one risky user separately belongs; and group regular users based on feature information of the regular users in the plurality of users, to obtain regular user groups to which the regular users separately belong, where the regular users are users in the plurality of users except the risky user.

Because the risk feature information indicates the feature that easily causes the service fault, a user that easily causes a service problem, that is, a risky user, can be accurately determined from the plurality of users based on the risk feature information of the plurality of users, and then user groups to which the risky user and the regular users belong are separately determined. In this way, the risky user and the regular users can be grouped into different user groups, to avoid impact of the risky user on the regular users to a maximum extent, and effectively improve quality of service of the target service for the regular users.

Optionally, the feature information includes a user risk feature tag. The user risk feature tag includes at least one sub-tag of a historical fault sub-tag and an abnormal traffic sub-tag. The historical fault sub-tag represents a number of times that a fault occurs in the target service due to traffic of a user, or represents a number of times that a user cannot obtain the target service. The abnormal traffic sub-tag represents a number of times that abnormal traffic of a user is generated.

Optionally, the risk feature information includes at least one risk sub-tag and a risk sub-tag weight corresponding to each risk sub-tag. When the feature information includes the user risk feature tag, the at least one risk sub-tag is at least one sub-tag of the historical fault sub-tag and the abnormal traffic sub-tag in the user risk feature tag.

An implementation process of determining the at least one risky user from the plurality of users based on the risk feature information of the plurality of users includes: determining, based on the risk feature information of the plurality of users, risk feature scores respectively corresponding to the plurality of users, sorting the risk feature scores of the plurality of users in descending order, and using users corresponding to the first p% of the risk feature scores of the sorting result as the at least one risky user.

Optionally, the resource deployment policy includes the number of the service units, and the cloud management platform can determine a number of user groups based on the number of the service units and the number of service copies. In this case, an implementation of grouping the regular users based on the feature information of the regular users in the plurality of users includes: grouping the regular users based on a number of risky user groups, the number of user groups, and the feature information of the regular users.

Optionally, the number of user groups is determined based on the number of the service units and the number of service copies of the target service by using the following formula (4):

$$T = C_N^{Rf} \quad (4)$$

In the foregoing formula (4), *T* indicates the number of user groups, N indicates the number of the service units, and *Rf* indicates the number of service copies.

Optionally, feature vectors of the regular users are determined based on the feature information of the regular users; the regular users are clustered based on the feature vectors of the regular users, to obtain a plurality of regular user clusters; and the regular user groups to which the regular users separately belong are determined based on the plurality of regular user clusters and a number of regular user groups, where the number of regular user groups is a difference between the number of user groups and the number of risky user groups.

Optionally, the feature information further includes at least one feature tag of a user value feature tag, a user requirement feature tag, or a user traffic feature tag, and a feature tag weight corresponding to each feature tag. A feature vector of a regular user includes at least one element, and the at least one element is in one-to-one correspondence with a feature tag included in the feature information. For any regular user, a value of an element corresponding to a target feature tag in a feature vector of the regular user is determined based on the target feature tag of the regular user, where the target feature tag is any one of the at least one feature tag. Processing is performed on each regular user in a same manner, so that a feature vector of each regular user can be obtained.

An implementation process of determining, based on the plurality of regular user clusters and the number of regular user groups, the regular user groups to which the regular users separately belong includes: randomly grouping regular users in each regular user cluster into K groups, to obtain K sub-clusters included in each regular user cluster, where K is equal to the number of regular user groups; and determining, based on the K sub-clusters included in each regular user cluster, the regular user groups to which the regular users separately belong.

An implementation process of determining, based on the K sub-clusters included in each regular user cluster, the regular user groups to which the regular users separately belong includes: setting g=1; randomly selecting a sub-cluster from the sub-clusters included in each of the plurality of regular user clusters, to obtain a plurality of sub-clusters; using regular users in the plurality of sub-clusters as users in a g$^{th}$ regular user group; and deleting the plurality of sub-clusters from the plurality of regular user clusters; or if g is less than the number of regular user groups, setting g=g+1, and returning to the step of randomly selecting the sub-cluster from the sub-clusters included in each of the plurality of regular user clusters, to obtain the plurality of sub-clusters.

For any regular user group, it can be ensured, by using the foregoing method, that users in the regular user group include a part of users in each regular user cluster. Because features of users in a regular user cluster are similar, and users in different regular user clusters have different features, it can be ensured that a finally-determined regular user group includes different feature users, so that even grouping of the regular users is implemented.

In actual application, alternatively, a risky user may not need to be determined, and a plurality of users may be directly grouped based on a number of user groups and feature information of the plurality of users of the tenant, to obtain user groups to which the plurality of users separately belong.

Optionally, feature vectors of the plurality of users are respectively determined based on the feature information of the plurality of users, then the plurality of users are clustered based on the feature vectors of the plurality of users, to obtain a plurality of user clusters, and the user groups to which the plurality of users separately belong are determined based on the number of user groups and the plurality of user clusters.

According to a second aspect, a service deployment apparatus is provided. The service deployment apparatus has a function of implementing the service deployment method provided in the first aspect. The service deployment apparatus includes at least one module, and the at least one module is configured to implement the service deployment method provided in the first aspect.

According to a third aspect, a compute device cluster is provided. The compute device cluster includes at least one compute device, each compute device includes a processor and a memory, and the processor of the at least one compute device is configured to execute instructions stored in the memory of the at least one compute device, to enable the compute device cluster to perform the service deployment method provided in the first aspect.

Optionally, each compute device may further include a communication bus. The communication bus is configured to establish a connection between the processor and the memory of each compute device.

According to a fourth aspect, a computer-readable storage medium is provided. The storage medium includes computer program instructions. When the computer program instructions are executed by a compute device cluster, the compute device cluster is enabled to perform the steps of the service deployment method provided in the first aspect.

According to a fifth aspect, a computer program product including instructions is provided. When the instructions are run in a compute device cluster, the compute device cluster is enabled to perform the steps of the service deployment method provided in the first aspect.

Technical effects achieved in the second aspect, the third aspect, the fourth aspect, and the fifth aspect are similar to the technical effects achieved by the corresponding technical means in the first aspect. Details are not described herein again.

## BRIEF DESCRIPTION OF DRAWINGS

FIG. 1 is a diagram of a service unit according to an embodiment of this application;
FIG. 2 is a diagram of an implementation environment according to an embodiment of this application;
FIG. 3 is a diagram of a cloud management platform according to an embodiment of this application;
FIG. 4 is a flowchart of a service deployment method according to an embodiment of this application;
FIG. 5 is a diagram of a configuration interface according to an embodiment of this application;
FIG. 6 is a diagram of a deployment manner of a target service according to an embodiment of this application;
FIG. 7 is a diagram of a deployment suggestion interface according to an embodiment of this application;
FIG. 8 is a diagram of another deployment manner of a target service according to an embodiment of this application;
FIG. 9 is a diagram of a structure of a service deployment apparatus according to an embodiment of this application;
FIG. 10 is a diagram of a structure of a computer device according to an embodiment of this application;
FIG. 11 is a diagram of an architecture of a compute device cluster according to an embodiment of this application; and
FIG. 12 is a diagram of a connection between compute devices according to an embodiment of this application.

## DESCRIPTION OF EMBODIMENTS

To make the objectives, technical solutions, and advantages of this application clearer, the following further describes the implementations of this application in detail with reference to the accompanying drawings.

For ease of understanding, before a service deployment method provided in embodiments of this application is described in detail, an application scenario and an implementation environment in embodiments of this application are first described.

First, the application scenario in embodiments of this application is described.

With the continuous development of information technologies, especially the internet technologies, large-scale governments, enterprises, and financial institutions start to build own data centers step by step to satisfy service requirements of the large-scale governments, enterprises, and financial institutions for resources. The cost of building a data center by simply adding physical devices is extremely high. Therefore, cloud computing emerges. A cloud service provider can construct a cloud platform by using a cloud computing technology, where the cloud platform includes a cloud management platform and a cloud infrastructure, the cloud management platform is configured to manage the cloud infrastructure, the cloud infrastructure includes at least one cloud data center, and a tenant can deploy a corresponding service in the at least one cloud data center.

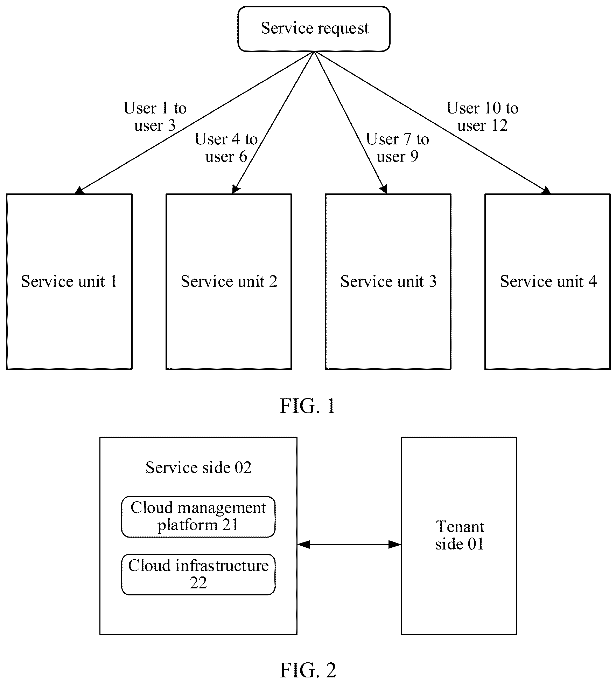

In a related technology, to ensure service availability, the tenant needs to deploy, in the at least one cloud data center, a plurality of service units that are independent of each other and that have a same service function, and each service unit has a complete service function. In this way, after a service request is received, the service request is routed, according to a specified rule, to a corresponding service unit for processing. For example, a correspondence between a user served by a service and a service unit is set, so that a corresponding service unit is determined based on a user sending a service request, and the service request is routed to the corresponding service unit for processing. For example, refer to FIG. 1. Users served by a service are a user 1 to a user 12, a number of service units is 4, and the service units are a service unit 1 to a service unit 4, where the service unit 1 corresponds to the user 1 to the user 3, the service unit 2 corresponds to the user 4 to the user 6, the service unit 3 corresponds to the user 7 to the user 9, and the service unit 4 corresponds to the user 10 to the user 12. In this case, if a service request sent by the user 1 is received, the service request can be then sent to the service unit 1 corresponding to the user 1 for processing.

However, in the foregoing method, one service unit may correspond to a plurality of users. If the service unit is faulty due to overload or a DDoS attack, the plurality of users corresponding to the service unit cannot use a service, and a redundancy capability of the service is poor. The service unit 1 is used as an example. The service unit 1 corresponds to the user 1 to the user 3. If the service unit 1 is faulty, the user 1, the user 2, and the user 3 served by the service unit 1 cannot use the service.

For ease of description, an explosion radius (also referred to as a fault radius) subsequently represents the redundancy capability of the service. A larger explosion radius indicates a poorer redundancy capability of the service, and a smaller explosion radius indicates a stronger redundancy capability of the service.

When traffic is even, in other words, when numbers and speeds of service requests sent by all users are the same and stable, if a service unit is faulty, in the foregoing manner, all users served by the service unit cannot normally obtain a service. Therefore, an explosion radius in the method is at a granularity of a service unit, and an explosion radius in the method is 1/N, where N is the number of the service units. In other words, a faulty service unit affects 1/N of services.

Based on this, an embodiment of this application provides a service deployment method, a resource deployment policy of a target service can be determined based on service configuration information and a number of service copies that are of the target service and that are entered by a tenant, and then the target service is deployed on a plurality of service units according to the resource deployment policy. The number of service copies is greater than or equal to 2, the resource deployment policy indicates that a service unit bears at least one user group of the tenant, every $Rf$ service units bear service copies of a same user group, and $Rf$ is the number of service copies. In other words, the service unit can provide a service for the at least one user group of the tenant, and each user group can be borne by at least two service units. In this case, for any user in any user group, even if a service unit that bears the user is faulty, the user can alternatively obtain a corresponding service from another service unit. In comparison with a method in which users served by a service unit cannot normally obtain a service because the service unit is faulty, according to the method provided in embodiments of this application, a redundancy capability of the target service can be effectively improved.

Next, an implementation environment in embodiments of this application is described.

FIG. 2 is a diagram of an implementation environment according to an embodiment of this application. The implementation environment includes a tenant side 01 and a service side (that is, a cloud platform) 02. The cloud platform includes a cloud management platform 21 and a cloud infrastructure 22. The cloud management platform is configured to manage the cloud infrastructure. The cloud infrastructure includes at least one cloud data center, and a plurality of service units are deployed in the at least one cloud data center.

The cloud management platform 21 can provide a configuration interface and display the configuration interface to the tenant side 01. The configuration interface indicates a tenant to enter service configuration information of a to-be-deployed target service. The cloud management platform 21 can obtain the service configuration information of the target service from the configuration interface, then determine a resource deployment policy of the target service based on the service configuration information and a number of service copies, and deploy the target service on the plurality of service units according to the resource deployment policy, where the resource deployment policy indicates that one service unit bears at least one user group of the tenant, and every $Rf$ service units bear service copies of a same user group.

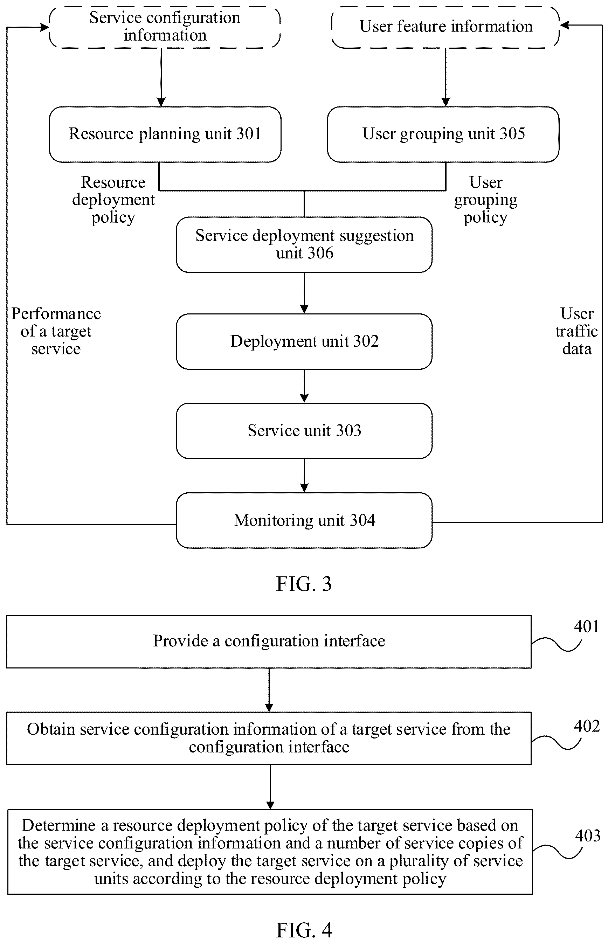

FIG. 3 is a diagram of a cloud management platform according to an embodiment of this application. The cloud management platform includes a resource planning unit 301, a deployment unit 302, and a service unit 303.

The resource planning unit 301 can obtain, from a configuration interface, service configuration information that is of a to-be-deployed target service and that is entered by a tenant, and determine a resource deployment policy of the target service based on the service configuration information and a number of service copies of the target service. The deployment unit 302 can deploy the target service on a plurality of service units according to the resource deployment policy of the target service. After the target service is deployed, a service can be provided for a user of the tenant by using the service unit 303.

Optionally, the cloud management platform further includes a monitoring unit 304. The monitoring unit 304 is configured to monitor user traffic data and running performance of the target service in a process in which the service unit 303 provides the service for the user of the tenant. In some embodiments, the monitoring unit 304 feeds back the running performance of the target service to the tenant, and the tenant can reset the service configuration information based on the running performance of the target service.

In a possible implementation, the cloud management platform further includes a user grouping unit 305. The user grouping unit 305 can obtain user feature information, where the user feature information is feature information of a plurality of users in user groups of the tenant, the feature information includes risk feature information, and the risk feature information indicates a feature that easily causes a service fault; then determine at least one risky user from the plurality of users based on the risk feature information of the plurality of users; group the at least one risky user to obtain a risky user group to which the at least one risky user separately belongs; group regular users based on feature information of the regular users in the plurality of users, to obtain regular user groups to which the regular users separately belong, where the regular users are users in the plurality of users except the risky user; and finally obtain a user grouping status of the tenant. For ease of description, the user grouping status is subsequently referred to as a user grouping policy. In this case, the deployment unit 302 can deploy the target service on the plurality of service units according to the resource deployment policy of the target service and the user grouping policy.

In some embodiments, the cloud management platform further includes a service deployment suggestion unit 306. The service deployment suggestion unit 306 can display a service deployment suggestion interface, where the service deployment suggestion interface is used to display the resource deployment policy of the target service. Optionally, the service deployment suggestion interface can further display the user grouping policy.

In some embodiments, the service deployment suggestion interface further indicates the tenant to trigger a service deployment request. In this case, the service deployment suggestion unit 306 can receive the service deployment request, and then deploy the target service according to the resource deployment policy displayed on the service deployment suggestion interface.

Optionally, when the cloud management platform further includes the user grouping unit 305, the monitoring unit 304 can further update the user feature information based on the monitored user traffic data.

A service deployment method provided in an embodiment of this application is executed by a cloud management platform included in a cloud platform. The cloud platform may be a server cluster, a distributed system, or the like that includes a plurality of physical servers, or may be a cloud server that provides basic cloud computing services such as a cloud service, a cloud data base, cloud computing, a cloud function, cloud storage, a network service, cloud communication, a middleware service, a domain name service, a security service, a content delivery network (content delivery network, CDN), big data, and an artificial intelligence platform, or may be a cloud computing service center.

A person skilled in the art should understand that the foregoing cloud platform, cloud management platform, and cloud infrastructure are merely examples. Another existing or possible future cloud platform, cloud management platform, and cloud infrastructure that are applicable to embodiments of this application should also fall within the protection scope of embodiments of this application, and are included herein by reference.

It should be noted that the application scenario and the implementation environment that are described in embodiments of this application are intended to describe the technical solutions in embodiments of this application more clearly, and do not constitute a limitation on the technical solutions provided in embodiments of this application. A person of ordinary skill in the art may be aware that, as a technology evolves and a new application scenario emerges, the technical solutions provided in embodiments of this application are also applicable to a similar technical problem.

FIG. 4 is a flowchart of a service deployment method according to an embodiment of this application. The method is applied to a cloud management platform, the cloud management platform is configured to manage a cloud infrastructure, the cloud infrastructure includes at least one cloud data center, and a plurality of service units are deployed in the at least one cloud data center. As shown in FIG. 4, the method includes the following steps.

**Step 401:** Provide a configuration interface, where the configuration interface indicates a tenant to enter service configuration information of a to-be-deployed target service, and the service configuration information is used to configure the target service.

The cloud management platform can indicate, by providing the configuration interface, the tenant to enter the service configuration information of the to-be-deployed target service, so that the tenant can enter the service configuration information of the target service on the configuration interface.

In some embodiments, the service configuration information includes one or more of the following: a minimum number of startup nodes of a microservice, a minimum startup specification of the microservice, a maximum number of resources, a service performance parameter, a maximum explosion radius, or a performance baseline of the microservice; and the maximum number of resources indicates an upper limit of resources occupiable by the target service, the service performance parameter indicates a lower limit of performance of the target service, the maximum explosion radius indicates a lower limit of a redundancy capability of the target service, and the performance baseline indicates a correspondence between a performance parameter and each of a startup specification and a number of startup nodes of the microservice.

It should be noted that the service unit in embodiments of this application includes at least one node, and each node may include a part of a physical server or an entire physical server. This is not limited in embodiments of this application.

In actual application, based on different service requirements, a microservice of the target service may be a distributed microservice or a centralized microservice. For any service unit, the distributed microservice indicates that the microservice is distributed on a plurality of nodes of the service unit, and the centralized microservice indicates that the microservice is distributed on one node of the service unit. The minimum number of startup nodes indicates a minimum number of nodes that are of the service unit and on which the microservice needs to be distributed.

For example, if a microservice used to provide the target service includes a data base (Data Base, DB) microservice, and the DB microservice is a distributed microservice, the DB microservice can form, by using a distributed storage technology, a virtual storage device by using distributed storage resources on a plurality of physical servers in a data center, to jointly exhibit a data storage function. If a minimum number of startup nodes of the DB microservice is 2, it indicates that the DB microservice needs to be distributed on at least two nodes of a service unit.

Optionally, the minimum startup specification of the microservice indicates a minimum specification of the microservice on a target node, and the target node is any one of at least one node on which the microservice is distributed. The minimum startup specification includes a minimum compute resource specification, a minimum memory resource specification, and a minimum hard disk resource specification.

For example, it is assumed that the microservice used to provide the target service includes an application programming interface (application programming interface, API) microservice and a DB microservice. A minimum startup specification of the API microservice is 4U 8G 50G, in other words, a minimum compute resource specification of the API microservice on the target node is four central processing unit (central processing unit, CPU) cores, a minimum memory resource specification is 8 gigabytes (gigabytes, GB), and a minimum hard disk resource specification is 50G. A minimum startup specification of the DB microservice is 32U 128G 1000G, in other words, a minimum compute resource specification of the DB microservice on the target node is 32 CPU cores, a minimum memory resource specification is 128 GB, and a minimum hard disk resource specification is 1000G.

Optionally, the maximum number of resources includes a maximum number of compute resources, a maximum number of memory resources, and a maximum number of hard disk resources.

For example, the maximum number of resources may be 800U 3200G 100T, in other words, the maximum number of compute resources is 800 CPU cores, the maximum number of memory resources is 3200G, and the maximum number of hard disk resources is 100 terabytes (terabytes, TB).

In some embodiments, the service performance parameter includes at least one of queries per second (queries per second, QPS), transactions per second (transactions per second, TPS), and a concurrency number. QPS indicates a number of queries that can be processed by the target service per second, TPS indicates a number of transactions that can be processed by the target service per second, and the concurrency number indicates a number of requests that can be simultaneously processed by the target service. It is clear that, in actual application, the service performance parameter may further include another parameter that can represent the performance of the target service. This is not limited in embodiments of this application.

For example, the service performance parameter may be 5000 QPS. In this case, it indicates that a lower limit of the number of queries that can be processed by the target service per second is 5000.

In actual application, for any microservice in any service unit of the target service, performance of microservices with different startup specifications and different numbers of startup nodes in the service unit varies. In some embodiments, the service configuration information includes the performance baseline of the microservice, and the performance baseline indicates the correspondence between the performance parameter and each of the startup specification and the number of startup nodes of the microservice. The performance parameter indicates performance of the microservice in the service unit when the microservice has a corresponding startup specification and a corresponding number of startup nodes.

Optionally, the startup specification of the microservice includes a compute resource specification, a memory resource specification, and a hard disk resource specification. The performance parameter of the microservice includes at least one of QPS, TPS, and a concurrency number. QPS indicates a number of queries that can be processed by a corresponding microservice in any service unit per second, TPS indicates a number of transactions that can be processed by a corresponding microservice in any service unit per second, and the concurrency number indicates a number of requests that can be simultaneously processed by a corresponding microservice in any service unit.

For example, a performance baseline of the API microservice is shown in Table 1. When a startup specification of the API microservice is 4U 8G 50G (in other words, a compute resource specification is 4 CPU cores, a memory resource specification is 8 GB, and a hard disk resource specification is 50G) and a number of startup nodes is 1, the API microservice can process 100 queries per second in any service unit. When a startup specification is 4U 8G 50G and a number of startup nodes is 5, the API microservice can process 600 queries per second in any service unit. When a startup specification is 4U 8G 50G and a number of startup nodes is 10, the API microservice can process 1600 queries per second in any service unit. When a startup specification is 4U 8G 50G and a number of startup nodes is 20, the API microservice can process 2800 queries per second in any service unit. When a startup specification is 8U 16G 100G (in other words, a compute resource specification is 8 CPU cores, a memory resource specification is 16 GB, and a hard disk resource specification is 100G) and a number of startup nodes is 1, the API microservice can process 500 queries per second in any service unit. When a startup specification is 8U 16G 100G and a number of startup nodes is 5, the API microservice can process 1800 queries per second in any service unit. When a startup specification is 8U 16G 100G and a number of startup nodes is 10, the API microservice can process 5000 queries per second in any service unit. When a startup specification is 8U 16G 100G and a number of startup nodes is 20, the API microservice can process 6800 queries per second in any service unit.

Table 1

| Startup specification | Number of startup nodes | Performance parameter |
| --- | --- | --- |
| 4U 8G 50G | 1 | 100 QPS |
| 4U 8G 50G | 5 | 600 QPS |
| 4U 8G 50G | 10 | 1600 QPS |
| 4U 8G 50G | 20 | 2800 QPS |
| 8U 16G 100G | 1 | 500 QPS |
| 8U 16G 100G | 5 | 1800 QPS |
| 8U 16G 100G | 10 | 5000 QPS |
| 8U 16G 100G | 20 | 6800 QPS |

It should be noted that the performance parameter of the microservice is in one-to-one correspondence with the foregoing service performance parameter. In other words, when the service performance parameter includes QPS, the performance parameter of the microservice also includes QPS; or when the service performance parameter includes TPS, the performance parameter of the microservice also includes TPS. When the service performance parameter includes the concurrency number, the performance parameter of the microservice also includes the concurrency number.

In some embodiments, the service configuration information further includes an explosion radius weight and a resource weight. The explosion radius weight and the resource weight indicate a trade-off proportion that is of the tenant and that is between the redundancy capability of the target service and a resource occupation status of the target service. If the explosion radius weight is greater than the resource weight, it indicates that the tenant attaches more importance to the redundancy capability of the target service, and expects that the redundancy capability of the target service is better. If the explosion radius weight is less than the resource weight, it indicates that the tenant attaches more importance to a resource usage status of the target service, and expects that the target service occupies fewer resources.

For example, the explosion radius weight may be 90, and the resource weight may be 10. That the explosion radius weight is greater than the resource weight indicates that the tenant attaches more importance to the redundancy capability of the target service in comparison with the resource usage status of the target service, and expects that the redundancy capability of the target service is better.

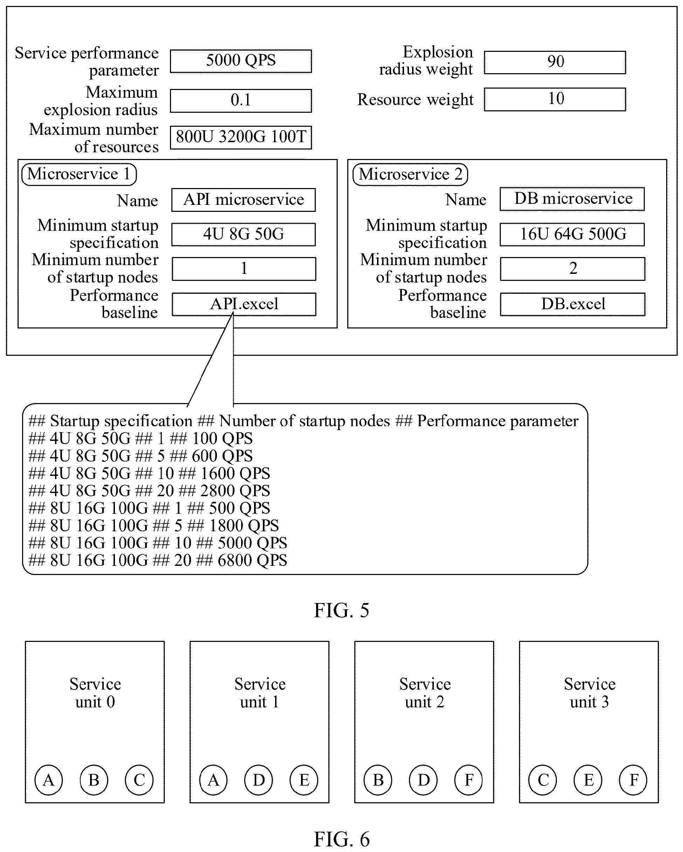

For example, the cloud management platform provides a configuration interface shown in FIG. 5, so that the tenant can enter the service configuration information of the target service on the configuration interface. The microservice used to provide the target service includes a microservice 1 and a microservice 2, the microservice 1 is an API microservice, and the microservice 2 is a DB microservice. A minimum startup specification of the API microservice is 4U 8G 50G, a minimum number of startup nodes is 1, and a performance baseline is a performance baseline table (API.excel) shown in FIG. 5. A minimum startup specification of the DB microservice is 16U 64G 500G, a minimum number of startup nodes is 2, and a performance baseline is DB.excel (not shown in FIG. 5). The maximum number of resources is 800U 3200G 100T, the service performance parameter is 5000 QPS, the maximum explosion radius is 0.1, the explosion radius weight is 90, and the resource weight is 10.

Optionally, the configuration interface further indicates the tenant to enter a number of service copies, so that the tenant can enter the number of service copies on the configuration interface. For any user group of the tenant, the number of service copies is a number of service units that are expected by the tenant and that bear the user group, and the number of service copies is greater than or equal to 2. It is clear that, in actual application, the number of service copies may alternatively be preconfigured. This is not limited in embodiments of this application.

Step 402: Obtain the service configuration information of the target service from the configuration interface.

Step 403: Determine a resource deployment policy of the target service based on the service configuration information and the number of service copies of the target service, and deploy the target service on the plurality of service units according to the resource deployment policy, where the resource deployment policy indicates that one service unit bears at least one user group of the tenant, every $Rf$ service units bear service copies of a same user group, $Rf$ is the number of service copies, and $Rf \geq 2$.

In other words, the service unit can provide a service for the at least one user group of the tenant, and each user group is borne by at least two service units. In this case, for any user in any user group, even if a service unit that bears the user is faulty, the user can alternatively obtain a corresponding service from another service unit. In comparison with a method in which users served by a service unit cannot normally obtain a service because the service unit is faulty, according to the method provided in embodiments of this application, the redundancy capability of the target service can be effectively improved.

Optionally, the resource deployment policy indicates that $Rf$ service copies of the user group are respectively deployed on independent service units, and every $Rf$ service units bear service copies of at most one same user group.

That every $Rf$ service units bear the service copies of the at most one same user group may also be understood as that only service copies corresponding to a same user group are deployed on any $Rf$ service units.

Because every $Rf$ service units bear the service copies of the at most one same user group, for any user group of the tenant, if any service unit that bears the user group is faulty, the user group can alternatively obtain a corresponding service from another service unit. The user group cannot obtain a service only when all service units that bear the user group are faulty. In this case, normal running of the target service is affected. However, because other user groups borne by the service unit that bears the user group are further borne by another service unit, even if all the service units that bear the user group are faulty, the other user groups can alternatively obtain services from the another service unit.

In other words, in embodiments of this application, running of the target service is affected only when any user group of the tenant cannot obtain a service. Therefore, in embodiments of this application, an explosion radius is at a granularity of a user group, and the explosion radius is 1/T, where T is a number of user groups of the tenant. In other words, that a user group cannot obtain a service affects 1/T of target services.

For example, it is assumed that a number of service units of the target service is 4, the service units are a service unit 0, a service unit 1, a service unit 2, and a service unit 3, the number of user groups of the tenant is 6, the user groups are a user group A, a user group B, a user group C, a user group D, a user group E, and a user group F, and the number of service copies is 2. In this case, each user group has two service copies. For any user group, the resource deployment policy indicates that two service copies of the user group are respectively deployed on independent service units, and every two service units of the service units of the target service bear service copies of at most one same user group. FIG. 6 shows a deployment manner of a target service according to an embodiment of this application. The service unit 0 bears the user group A, the user group B, and the user group C, the service unit 1 bears the user group A, the user group D, and the user group E, the service unit 2 bears the user group B, the user group D, and the user group F, and the service unit 3 bears the user group C, the user group E, and the user group F. The user group A is used as an example. Two service copies of the user group A are respectively deployed on independent service units (namely, the service unit 0 and the service unit 1). Any two service units (the service unit 1 and the service unit 2) of the service units of the target service are used as an example. The service unit 1 bears the user group A, the user group D, and the user group E, the service unit 2 bears the user group B, the user group D, and the user group F, and only service copies corresponding to a same user group (the user group D) are deployed on the service unit 1 and the service unit 2.

For the user group A, if both the service unit 0 and the service unit 1 that bear the user group A are faulty, the user group A cannot obtain a service. In this case, normal running of the target service is affected. Other user groups borne by the service unit 0 and the service unit 1 are the user group B, the user group C, the user group D, and the user group E. The user group B is used as an example. The user group B is further borne by the service unit 2. Therefore, even if both the service unit 0 and the service unit 1 are faulty, the user group B can alternatively obtain a service from the service unit 2.

In some embodiments, the resource deployment policy includes a number of the service units used to provide the target service and a deployment specification of the service units, and the service units used to provide the target service have a same specification and same performance. In this case, an implementation process of determining the resource deployment policy of the target service based on the service configuration information and the number of service copies includes: determining, based on the service configuration information, the number of service copies of the target service, and a resource deployment constraint condition, the number of the service units used to provide the target service and the deployment specification of the service units.

The resource deployment constraint condition includes one or more of the following: the minimum number of startup nodes of the microservice, the minimum startup specification of the microservice, the maximum number of resources, the service performance parameter, the maximum explosion radius, the number of service copies, or the performance baseline of the microservice; and the maximum number of resources indicates the upper limit of the resources occupiable by the target service, the service performance parameter indicates the lower limit of the performance of the target service, the maximum explosion radius indicates the lower limit of the redundancy capability of the target service, and the performance baseline indicates the correspondence between the performance parameter and each of the startup specification and the number of startup nodes of the microservice.

The maximum number of resources indicates the upper limit of the resources occupiable by the target service, the service performance parameter indicates the lower limit of the performance of the target service, and the maximum explosion radius indicates the lower limit of the redundancy capability of the target service. Therefore, based on the resource deployment constraint condition, it can be ensured that resources occupied by the target service does not exceed the maximum number of resources, the performance of the target service is not lower than the service performance parameter, and the redundancy capability of the target service is better than or equal to the redundancy capability indicated by the maximum explosion radius. In other words, in embodiments of this application, under the constraint of the resource deployment constraint condition, the determined resource deployment policy of the target service can consider service performance, the redundancy capability, and resource costs of the target service, so that the target service can have a smaller explosion radius and better performance in comparison with a related technology when the maximum number of resources remains unchanged.

In some embodiments, a plurality of candidate resource deployment policies are determined based on the service configuration information, the number of service copies of the target service, and the resource deployment constraint condition, where the candidate resource deployment policy includes a candidate number of service units and a candidate deployment specification of the service units. A candidate resource deployment policy is selected from the plurality of candidate resource deployment policies, and a candidate number and a candidate deployment specification that are of service units and that are included in the selected candidate resource deployment policy are used as the number and the deployment specification that are of the service units and that are included in the resource deployment policy of the target service.

Optionally, the candidate deployment specification includes a number of startup nodes and a startup specification that respectively correspond to at least one microservice that is in the service units and that is used to provide the target service, and the resource deployment constraint condition satisfies the following inequality:

$$\begin{cases} \min num_i \le num_i \\ \min s_i \le s_i \\ s_i num_i \le S \\ \sum_{i=1}^{n} s_i num_i \le \dfrac{S}{N} \\ \min t(j) \ge \dfrac{T}{N} \\ B \ge \dfrac{1}{C_N^{Rf}} \end{cases} \qquad num_i \in X_i, s_i \in X_i, j \in 1, \ldots, n$$

In the foregoing inequality, $i$ indicates an $i^{th}$ microservice, $\min num_i$ indicates a minimum number of startup nodes of the $i^{th}$ microservice, $num_i$ indicates a number of startup nodes of the $i^{th}$ microservice in the candidate deployment specification, $\min s_i$ indicates a minimum startup specification of the $i^{th}$ microservice, $s_i$ indicates a startup specification of the $i^{th}$ microservice in the candidate deployment specification, $S$ indicates the maximum number of resources, $n$ indicates a number of the at least one microservice in the service units, $N$ indicates the candidate number of the service units, $\min t(j)$ indicates a minimum performance parameter corresponding to a startup specification and a number of startup nodes of a $j^{th}$ microservice in the candidate deployment specification, $T$ indicates the service performance parameter, $B$ indicates the maximum explosion radius, $Rf$ indicates the number of service copies, and $X_i$ indicates a performance baseline of the $i^{th}$ microservice.

When a startup specification of a microservice includes a compute resource specification, a memory resource specification, and a hard disk resource specification, a minimum startup specification includes a minimum compute resource specification, a minimum memory resource specification, and a minimum hard disk resource specification, and the maximum number of resources includes a maximum number of compute resources, a maximum number of memory resources, and a maximum number of hard disk resources, in the foregoing inequality, $\min s_i \le s_i$ indicates that a minimum compute resource specification of the $i^{th}$ microservice is less than or equal to a compute resource specification of the $i^{th}$ microservice in the candidate deployment specification, a minimum memory resource specification of the $i^{th}$ microservice is less than or equal to a memory resource specification of the $i^{th}$ microservice in the candidate deployment specification, and a minimum hard disk resource specification of the $i^{th}$ microservice is less than or equal to a hard disk resource specification of the $i^{th}$ microservice in the candidate deployment specification.

Similarly, in the foregoing inequality, $s_i num_i \le S$ indicates that a product of the compute resource specification of the $i^{th}$ microservice in the candidate deployment specification and the number of startup nodes of the $i^{th}$ microservice is less than or equal to the maximum number of compute resources, a product of the memory resource specification of the $i^{th}$ microservice in the candidate deployment specification and the number of startup nodes of the $i^{th}$ microservice is less than or equal to the maximum number of memory resources, and a product of the hard disk resource specification of the $i^{th}$ microservice in the candidate deployment specification and the number of startup nodes of the $i^{th}$ microservice is less than or equal to the maximum number of hard disk resources.

For any candidate deployment specification, the candidate deployment specification includes a number of startup nodes and a startup specification that correspond to each microservice in the service units. Because there is the correspondence between the performance parameter and each of the startup specification and the number of startup nodes of the microservice, each microservice further corresponds to a corresponding performance parameter. For the service units, performance of the service units is actually determined by microservices with minimum performance parameters in the service units. Therefore, if the performance parameters of all the microservices with the minimum performance parameters in the service units are greater than or equal to $T/N$, it can be ensured that a sum of the performance of the N service units (that is, the performance of the target service) is not lower than the service performance parameter ($T$).

It should be noted that the number of service copies is not greater than the number of the service units.

In some embodiments, the service configuration information includes the explosion radius weight and the resource weight. In this case, the candidate resource deployment policy may be selected from the plurality of candidate resource deployment policies based on the explosion radius weight and the resource weight.

Optionally, a $q^{th}$ candidate resource deployment policy may be selected from the plurality of candidate resource deployment policies as the resource deployment policy of the target service based on the explosion radius weight and the resource weight. The $q^{th}$ candidate resource deployment policy satisfies the following formulas (1) to (3):

$$\min(\alpha_1 A_q + \alpha_2 R_q) \quad q \in 1,\ldots, \mathrm{z} \quad (1)$$

$$A_q = f\left(qN\sum_{i=1}^{n} s_{qi} num_{qi}\right) \quad (2)$$

$$R_q = \frac{1}{C_{qN}^{Rf}} \quad (3)$$

In the foregoing formulas (1) to (3), min() indicates taking a minimum value in the bracket, $\alpha_1$ indicates the resource weight, $\alpha_2$ indicates the explosion radius weight, Z indicates a number of candidate resource deployment policies, and $q$ indicates the $q^{th}$ candidate resource deployment policy in the plurality of candidate resource deployment policies. $f()$ indicates normalization of the number in the bracket, $q^N$ indicates a candidate number of service units in the $q^{th}$ candidate resource deployment policy, $s_{qi}$ indicates a startup specification of the $i^{th}$ microservice in the $q^{th}$ candidate resource deployment policy, $num_{qi}$ indicates a number of startup nodes of the $i^{th}$ microservice in the $q^{th}$ candidate resource deployment policy, $n$ indicates the number of the at least one microservice in the service units, and $Rf$ indicates the number of service copies.

It should be noted that $qN\sum_{i=1}^{n} s_{qi} num_{qi}$ can represent a number of resources occupied by the $q^{th}$ candidate resource deployment policy, and an implementation process of normalizing the number of resources occupied by the $q^{th}$ candidate resource deployment policy may be: A value obtained by dividing the number of resources occupied by the $q^{th}$ candidate resource deployment policy by the maximum number of resources is used as a normalized value of the number of resources occupied by the $q^{th}$ candidate resource deployment policy.

Optionally, the number of resources occupied by the $q^{th}$ candidate resource deployment policy includes a number of compute resources, a number of memory resources, and a number of hard disk resources, and the maximum number of resources includes a maximum number of compute resources, a maximum number of memory resources, and a maximum number of hard disk resources. In this case, the number of compute resources, the number of memory resources, and the number of hard disk resources that are occupied by the $q^{th}$ candidate resource deployment policy may be separately normalized, to obtain a normalized number of compute resources, a normalized number of memory resources, and a normalized number of hard disk resources. A sum of the normalized number of compute resources, the normalized number of memory resources, and the normalized number of hard disk resources is used as the normalized value of the number of resources occupied by the $q^{th}$ candidate resource deployment policy.

A value obtained by dividing the number of compute resources occupied by the $q^{th}$ candidate resource deployment policy by the maximum number of compute resources is used as the normalized number of compute resources, a value obtained by dividing the number of memory resources occupied by the $q^{th}$ candidate resource deployment policy by the maximum number of memory resources is used as the normalized number of memory resources, and a value obtained by dividing the number of hard disk resources occupied by the $q^{th}$ candidate resource deployment policy by the maximum number of hard disk resources is used as the normalized number of hard disk resources.

It is clear that the foregoing is merely a manner of normalizing the number of resources occupied by the $q^{th}$ candidate resource deployment policy. In actual application, the number of resources occupied by the $q^{th}$ candidate resource deployment policy may be normalized in another manner. This is not limited in embodiments of this application.

In actual application, to accelerate a solving speed, the $q^{th}$ candidate resource deployment policy may alternatively be selected from the plurality of candidate resource deployment policies as the resource deployment policy of the target service based on the inequality satisfied by the resource deployment constraint condition and the foregoing formulas (1) to (3) by using a particle swarm algorithm. This is not limited in embodiments of this application.

In some embodiments, in addition to selecting the candidate resource deployment policy from the plurality of candidate resource deployment policies based on the explosion radius weight and the resource weight, any candidate resource deployment policy may alternatively be selected from the plurality of candidate resource deployment policies. This is not limited in embodiments of this application.

It should be noted that, in embodiments of this application, all the service units of the target service are located in a same region (region). If the region includes a plurality of availability zones (availability zones, AZs), for a microservice with a plurality of startup nodes in the resource deployment policy of the target service, nodes on which the microservice is distributed may be located in a same AZ, or may be located in different AZs. This is not limited in embodiments of this application. Because a fault in an AZ does not affect another AZ and region, if the nodes on which the microservice is distributed are located in different AZs, redundancy performance of the target service can be further improved.

In actual application, after the resource deployment policy of the target service is determined based on the service configuration information and the number of service copies of the target service, the cloud management platform can further display a service deployment suggestion interface, where the service deployment suggestion interface is used to display the resource deployment policy of the target service.

Optionally, the service deployment suggestion interface is further used to display at least one of a resource consumption status and an actual explosion radius, the resource consumption status indicates a number of resources occupied by the resource deployment policy of the target service, and the actual explosion radius indicates the redundancy capability of the target service deployed according to the resource deployment policy of the target service.

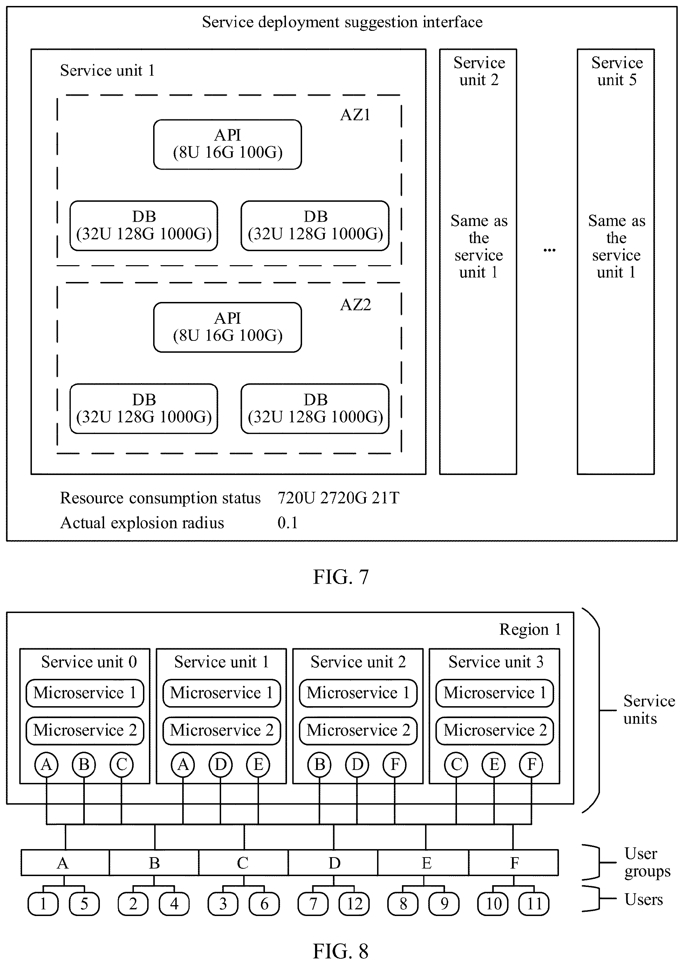

For example, if the microservice of the target service include an API microservice and a DB microservice, refer to FIG. 7. In a service deployment suggestion interface shown in FIG. 7, there are five service units used to provide the target service in the resource deployment policy of the target service. For any service unit, a number of startup nodes of an API microservice in the service unit is two, and a startup specification is 8U 16G 100G; and a number of startup nodes of a DB microservice is four, and a startup specification is 32U 128G 1000G. The two nodes of the API microservice are located in two AZs: AZ1 and AZ2. The four nodes of the DB microservice are also located in the two AZs: AZ1 and AZ2. Two nodes of the four nodes of the DB microservice are located in a same AZ. The resource consumption status corresponding to the resource deployment policy of the target service is 720U 2720G 21T, and the actual explosion radius is 0.1.

In a possible implementation, the service deployment suggestion interface further indicates the tenant to trigger a service deployment request. Before deploying the target service on the plurality of service units according to the resource deployment policy, the cloud management platform can further receive the service deployment request, where the service deployment request indicates the cloud management platform to deploy the target service according to the resource deployment policy displayed on the service deployment suggestion interface.

In other words, after the resource deployment policy of the target service is displayed, the tenant can further trigger the service deployment request on the service deployment suggestion interface, and the cloud management platform can further receive the service deployment request triggered by the tenant, to deploy the target service on the plurality of service units according to the resource deployment policy.

In actual application, the service configuration information further includes user feature information. In this case, the cloud management platform can alternatively obtain the user feature information, where the user feature information is feature information of a plurality of users in user groups of the tenant, the feature information includes risk feature information, and the risk feature information indicates a feature that easily causes a service fault; determine at least one risky user from the plurality of users based on the risk feature information of the plurality of users; group the at least one risky user to obtain a risky user group to which the at least one risky user separately belongs; and group regular users based on feature information of the regular users in the plurality of users, to obtain regular user groups to which the regular users separately belong, where the regular users are users in the plurality of users except the risky user.

Because the risk feature information indicates the feature that easily causes the service fault, a user that easily causes a service problem, that is, a risky user, can be accurately determined from the plurality of users based on the risk feature information of the plurality of users, and then user groups to which the risky user and the regular users belong are separately determined. In this way, the risky user and the regular users can be grouped into different user groups, to avoid impact of the risky user on the regular users to a maximum extent, and effectively improve quality of service of the target service for the regular users.

In some embodiments, the feature information includes a user risk feature tag. The user risk feature tag includes at least one sub-tag of a historical fault sub-tag and an abnormal traffic sub-tag. The historical fault sub-tag represents a number of times that a fault occurs in the target service due to traffic of a user, or represents a number of times that a user cannot obtain the target service. The abnormal traffic sub-tag represents a number of times that abnormal traffic of a user is generated.

Optionally, the risk feature information includes at least one risk sub-tag and a risk sub-tag weight corresponding to each risk sub-tag. When the feature information includes the user risk feature tag, the at least one risk sub-tag is at least one sub-tag of the historical fault sub-tag and the abnormal traffic sub-tag in the user risk feature tag.

An implementation process of determining the at least one risky user from the plurality of users based on the risk feature information of the plurality of users includes: determining, based on the risk feature information of the plurality of users, risk feature scores respectively corresponding to the plurality of users, sorting the risk feature scores of the plurality of users in descending order, and using users corresponding to the first p% of the risk feature scores of the sorting result as the at least one risky user.

In some embodiments, for any one of the plurality of users, at least one risk sub-tag in risk feature information of the user is normalized to obtain at least one normalized risk sub-tag, and a risk feature score corresponding to the user is determined based on the at least one normalized risk sub-tag and a risk sub-tag weight corresponding to each risk sub-tag. Processing is performed on each of the plurality of users in a same manner to determine the risk feature scores respectively corresponding to the plurality of users.

In some embodiments, for any risk sub-tag, the risk sub-tag of the user is divided by a largest value of risk sub-tags of the plurality of users, to obtain a normalized risk sub-tag. Processing is performed on each of the at least one risk sub-tag in a same manner to obtain the at least one normalized risk sub-tag.

Optionally, each normalized risk sub-tag is multiplied by a risk sub-tag weight corresponding to the risk sub-tag, to obtain at least one first sub-tag, and a sum of the at least one first sub-tag is used as a risk feature score corresponding to the user.

For example, the at least one risky user may be grouped into a same user group, to obtain a risky user group to which the at least one risky user belongs. It is clear that, in actual application, if there is a large number of risky users, the large number of risky users may be randomly grouped into at least two user groups, to obtain risky user groups to which the large number of risky users separately belong. This is not limited in embodiments of this application.

In some embodiments, the resource deployment policy includes the number of the service units, and the cloud management platform can determine a number of user groups based on the number of the service units and the number of service copies. In this case, an implementation of grouping the regular users based on the feature information of the regular users in the plurality of users includes: grouping the regular users based on a number of risky user groups, the number of user groups, and the feature information of the regular users.

Optionally, the number of user groups is determined based on the number of the service units and the number of service copies of the target service by using the following formula (4):

$$T = C_N^{Rf} \quad (4)$$

In the foregoing formula (4), $T$ indicates the number of user groups, N indicates the number of the service units, and $Rf$ indicates the number of service copies.

For example, when $N$ is equal to 4, and $Rf$ is equal to 2, $C_N^{Rf} = (4 \times 3)/(1 \times 2) = 6$, that is, the number of user groups is 6.

In actual application, after the number of user groups is determined, the service deployment suggestion interface may further display the number of user groups.

In some embodiments, feature vectors of the regular users are determined based on the feature information of the regular users; the regular users are clustered based on the feature vectors of the regular users, to obtain a plurality of regular user clusters; and the regular user groups to which the regular users separately belong are determined based on the plurality of regular user clusters and a number of regular user groups, where the number of regular user groups is a difference between the number of user groups and the number of risky user groups.

In some embodiments, the feature information further includes at least one feature tag of a user value feature tag, a user requirement feature tag, or a user traffic feature tag, and a feature tag weight corresponding to each feature tag. A feature vector of a regular user includes at least one element, and the at least one element is in one-to-one correspondence with a feature tag included in the feature information. For any regular user, a value of an element corresponding to a target feature tag in a feature vector of the regular user is determined based on the target feature tag of the regular user, where the target feature tag is any one of the at least one feature tag. Processing is performed on each regular user in a same manner, so that a feature vector of each regular user can be obtained.

Optionally, the user risk feature tag further includes a sub-tag weight corresponding to each sub-tag.

Optionally, the user value feature tag includes at least one sub-tag of a user level sub-tag, a user category sub-tag, and a user type sub-tag, and a sub-tag weight corresponding to each sub-tag. The user level sub-tag represents a level of a user in the target service of the tenant. The user category sub-tag represents that a user is an internal user or an external user, represents an age level of a user, represents an occupation attribute of a user, or represents a gender of the user. The user type sub-tag represents whether a user is a very important person (very important person, VIP) user.

Optionally, the user requirement feature tag includes at least one sub-tag of an availability requirement sub-tag and a service type sub-tag, and a sub-tag weight corresponding to each sub-tag. The availability requirement sub-tag represents a quality requirement of a user for a service provided by the target service, and the service type sub-tag represents a service type that a user needs the target service to provide.

In some embodiments, the quality requirement of the user for the service provided by the target service may be determined according to a service level agreement (service level agreement, SLA), or may be determined in another manner. This is not limited in this embodiment of this application.

For example, it is assumed that a service type that can be provided by the target service include a service A, a service B, and a service C. In this case, for any user of the tenant, based on a service type that is of the target service and that is historically accessed by the user, a service type that is most frequently accessed or most recently accessed and that is in the historical accessed service type may be used as a service type sub-tag of the user. It is clear that, in actual application, the service type sub-tag of the user may alternatively be determined in another manner. This is not limited in this embodiment of this application.

Optionally, the user traffic feature tag includes at least one sub-tag of a traffic sub-tag and an overload sub-tag, and a sub-tag weight corresponding to each sub-tag. The traffic sub-tag represents a volume of traffic generated by a user in a historical time period, and the overload sub-tag represents a number of times that the target service is overloaded due to a user in a historical time period.

The historical time period is set in advance. For example, the historical time period may be set to recent three months. In this case, if current time is January 1, 2000, the historical time period is from October 1, 1999 to December 31, 1999. In addition, in different cases, modification may be further performed based on different requirements.

For example, as shown in Table 2, the feature information includes the user value feature tag, the user risk feature tag, and the user traffic feature tag, a feature tag weight of the user value feature tag is 0.5, a feature tag weight of the user risk feature tag is 0.2, and a feature tag weight of the user traffic feature tag is 0.3. The user value feature tag includes the user level sub-tag, the user category sub-tag, and the user type sub-tag, a value range of the user level sub-tag is a positive integer greater than 0 and not greater than 9, a sub-tag weight corresponding to the user level sub-tag is 0.8, a value range of the user category sub-tag is 0 or 1, a sub-tag weight corresponding to the user category sub-tag is 0.1, a value range of the user type sub-tag is 0 or 1, and a sub-tag weight corresponding to the user type sub-tag is 0.1. The user risk feature tag includes the historical fault sub-tag and the abnormal traffic sub-tag, a value range of the historical fault sub-tag is a positive integer greater than 0 and not greater than 100, a sub-tag weight corresponding to the historical fault sub-tag is 0.8, the abnormal traffic sub-tag is a positive integer greater than 0 and not greater than 100, and a sub-tag weight corresponding to the abnormal traffic sub-tag is 0.2. The user traffic feature tag includes the traffic sub-tag, a value range of the traffic sub-tag is a real number, and a sub-tag weight corresponding to the traffic sub-tag is 1.

Table 2

| Feature tag | Feature tag weight | Sub-tag | Value range | Sub-tag weight |
|---|---|---|---|---|
| User value | 0.5 | User level | $\{x \in N^* \mid x > 0 \ \& \ \& x \leq 9\}$ | 0.8 |
| | | User category | $\{0,1\}$ | 0.1 |
| | | User type | $\{0,1\}$ | 0.1 |
| User risk | 0.2 | Historical fault | $\{x \in N^* \mid x \geq 0 \ \& \ \& x \leq 100\}$ | 0.8 |
| | | Abnormal traffic | $\{x \in N^* \mid x \geq 0 \ \& \ \& x \leq 100\}$ | 0.2 |
| User traffic | 0.3 | Traffic | $\{x \in R\}$ | 1 |

In some embodiments, an implementation process of determining, based on the target feature tag of the regular user, the value of the element corresponding to the target feature tag in the feature vector of the regular user includes: normalizing at least one sub-tag in the target feature tag of the regular user, to obtain at least one normalized sub-tag; and determining, based on the at least one normalized sub-tag, a weight corresponding to each sub-tag, and a feature tag weight corresponding to the target feature tag, the value of the element corresponding to the target feature tag.

For any one of the at least one sub-tag, the sub-tag of the regular user is divided by a largest value of corresponding sub-tags of the plurality of regular users, to obtain a normalized sub-tag. Processing is performed on each of the at least one sub-tag in a same manner to obtain the at least one normalized sub-tag.

Each normalized sub-tag is multiplied by a sub-tag weight corresponding to the sub-tag, to obtain at least one second sub-tag, and a sum of the at least one second sub-tag is multiplied by the feature tag weight corresponding to the target feature tag, to obtain the value of the element corresponding to the target feature tag.

In some embodiments, the regular users are clustered based on the feature vectors of the regular users by using a related clustering algorithm, to obtain the plurality of regular user clusters.

Optionally, the clustering algorithm may be a K-means algorithm, a k-means++ algorithm, or the like. This is not limited in this embodiment of this application.

An implementation process of determining, based on the plurality of regular user clusters and the number of regular user groups, the regular user groups to which the regular users separately belong includes: randomly grouping regular users in each regular user cluster into K groups, to obtain K sub-clusters included in each regular user cluster, where K is equal to the number of regular user groups; and determining, based on the K sub-clusters included in each regular user cluster, the regular user groups to which the regular users separately belong.

An implementation process of determining, based on the K sub-clusters included in each regular user cluster, the regular user groups to which the regular users separately belong includes: setting g=1; randomly selecting a sub-cluster from the sub-clusters included in each of the plurality of regular user clusters, to obtain a plurality of sub-clusters; using regular users in the plurality of sub-clusters as users in a $g^{th}$ regular user group; and deleting the plurality of sub-clusters from the plurality of regular user clusters; or if g is less than the number of regular user groups, setting g=g+1, and returning to the step of randomly selecting the sub-cluster from the sub-clusters included in each of the plurality of regular user clusters, to obtain the plurality of sub-clusters.

For any regular user group, it can be ensured, by using the foregoing method, that users in the regular user group include a part of users in each regular user cluster. Because features of users in a regular user cluster are similar, and users in different regular user clusters have different features, it can be ensured that a finally-determined regular user group includes different feature users, so that even grouping of the regular users is implemented.

The following uses an example to describe an implementation process of grouping the users of the tenant.

For example, refer to Table 3. The cloud management platform can obtain user feature information shown in Table 3. User groups of the tenant include eight users, and the eight users are a user A to a user H. Feature information of each of the user A to the user H includes a user value feature tag, a user risk feature tag, a user requirement feature tag, a user traffic feature tag, and a feature tag weight (not shown in Table 3) corresponding to each feature tag. The user risk feature tag includes a historical fault sub-tag, an abnormal traffic sub-tag, and a sub-tag weight (not shown in Table 3) corresponding to each sub-tag. The user value feature tag includes a user level sub-tag, a user category sub-tag, a user type sub-tag, and a sub-tag weight (not shown in Table 3) corresponding to each sub-tag. The user traffic feature tag includes a traffic sub-tag and a sub-tag weight (not shown in Table 3) corresponding to the traffic sub-tag. In feature information of the user A, a user level sub-tag is 9, a user category sub-tag is 1, a user type sub-tag is 1, a historical fault sub-tag is 2, an abnormal traffic sub-tag is 2, and a traffic sub-tag is 5 gigabytes (gigabytes, GB). Feature information of the user B to the user H is similar to the feature information of the user A. Details are not described herein again.

Table 3

| User name | User value feature tag | | | User risk feature tag | | User traffic feature tag |
|---|---|---|---|---|---|---|
| | User level sub-tag | User category sub-tag | User type sub-tag | Historical fault sub-tag | Abnormal traffic sub-tag | Traffic sub-tag |
| User A | 9 | 1 | 1 | 2 | 2 | 5G |
| User B | 6 | 1 | 1 | 4 | 1 | 1G |
| User C | 1 | 0 | 0 | 5 | 4 | 50M |
| User D | 2 | 0 | 0 | 4 | 4 | 80M |
| User E | 8 | 1 | 1 | 2 | 1 | 3G |
| User F | 5 | 1 | 1 | 5 | 2 | 400M |

(continued)

| User name | User value feature tag | | | User risk feature tag | | User traffic feature tag |
|---|---|---|---|---|---|---|
| | User level sub-tag | User category sub-tag | User type sub-tag | Historical fault sub-tag | Abnormal traffic sub-tag | Traffic sub-tag |
| User G | 3 | 0 | 1 | 4 | 0 | 200M |
| User H | 2 | 0 | 0 | 1 | 0 | 200M |

Risky feature information of a user includes at least one risk sub-tag, the at least one risk sub-tag is a historical fault sub-tag and an abnormal traffic sub-tag in a user risk feature tag, and a risk sub-tag weight corresponding to each risk sub-tag is 0.5. Based on risk feature information of the eight users, risk feature scores respectively corresponding to the eight users are determined, and the risk feature scores of the plurality of users are sorted in descending order. Users corresponding to the first 10% of the risk feature scores of the sorting result are the user C and the user D. Therefore, the user C and user D are considered as risky users, and the user C and user D are grouped into a same risky user group (risky user group 1). Further, feature vectors of regular users are determined based on feature information of the regular users (the user A, the user B, and the user E to the user H), and the regular users are clustered based on the feature vectors of the regular users, to obtain a plurality of regular user clusters. The feature vectors of the regular users and the corresponding regular user clusters are shown in Table 4 below.

Table 4

| Regular user cluster | User name | User vector |
|---|---|---|
| Regular user cluster 1 | User A | [0.5000,0.0040,0.3000] |
| Regular user cluster 2 | User E | [0.4556,0.0036,0.1788] |
| Regular user cluster 3 | User B | [0.3667,0.0068,0.0576] |
| | User F | 0.3222,0.0088,0.0212 |
| | User G | 0.1833,0.0064,0.0091 |
| | User H | 0.0889,0.0016,0.0091 |

Refer to Table 5. Regular user groups to which the regular users separately belong and a risky user group to which the risky users belong that are shown in Table 5 are determined based on the plurality of regular user clusters and a number of regular user groups.

Table 5

| User group sequence number | User name |
|---|---|
| Regular user group 1 | User A |
| Regular user group 2 | User E |
| Regular user group 3 | User B |
| | User F |
| Regular user group 4 | User G |
| | User H |
| Risky user group 1 | User C |
| | User D |

Based on the foregoing descriptions, in this embodiment of this application, the risky user can be first grouped, and then the regular users are grouped, to isolate the risky user from the regular users, so that impact of the risky user on the regular users is avoided to a maximum extent, and the quality of service of the target service for the regular users is effectively improved. However, in actual application, alternatively, a risky user may not need to be determined, and a plurality of users may be directly grouped based on a number of user groups and feature information of the plurality of users of the tenant, to obtain user groups to which the plurality of users separately belong.

In some embodiments, feature vectors of the plurality of users may be respectively determined based on the feature information of the plurality of users; then the plurality of users are clustered based on the feature vectors of the plurality of users, to obtain a plurality of user clusters; and the user groups to which the plurality of users separately belong are determined based on the number of user groups and the plurality of user clusters.

An implementation of respectively determining the feature vectors of the plurality of users based on the feature information of the plurality of users is similar to the foregoing implementation of determining the feature vectors of the regular users based on the feature information of the regular users. An implementation of clustering the plurality of users based on the feature vectors of the plurality of users, to obtain the plurality of user clusters is similar to the foregoing implementation of clustering the regular users based on the feature vectors of the regular users, to obtain the plurality of regular user clusters. An implementation of determining, based on the number of user groups and the plurality of user clusters, the user groups to which the plurality of users separately belong is similar to the foregoing implementation of determining, based on the plurality of regular user clusters and the number of regular user groups, the regular user groups to which the regular users separately belong. For detailed content, refer to the foregoing related content. Details are not described herein again.

The following describes the service deployment method provided in an embodiment of this application again with reference to FIG. 8.

For example, refer to FIG. 8. If a number of service copies is 2, a microservice used to provide a target service includes a microservice 1 and a microservice 2, a resource deployment policy of the target service is determined based on service configuration information and the number of service copies of the target service, and the target service is deployed on a plurality of service units according to the resource deployment policy. In the resource deployment policy, a number of service units of the target service is 4, and the service units are a service unit 0, a service unit 1, a service unit 2, and a service unit 3. Users of a tenant are a user 1 to a user 12. A number of user groups of the tenant is 6, and the user groups are a user group A, a user group B, a user group C, a user group D, a user group E, and a user group F. The user group A includes the user 1 and the user 5, the user group B includes the user 2 and the user 4, the user group C includes the user 3 and the user 6, the user group D includes the user 7 and the user 12, the user group E includes the user 8 and the user 9, and the user group F includes the user 10 and the user 11. The resource deployment policy indicates that two service copies of a user group are respectively deployed on independent service units, and every two service units bear service copies of at most one same user group. The service unit 0 bears the user group A, the user group B, and the user group C, the service unit 1 bears the user group A, the user group D, and the user group E, the service unit 2 bears the user group B, the user group D, and the user group F, and the service unit 3 bears the user group C, the user group E, and the user group F. The user group A is used as an example. Two service copies of the user group A are respectively deployed on independent service units (namely, the service unit 0 and the service unit 1). Any two service units (the service unit 1 and the service unit 2) of the service units of the target service are used as an example. The service unit 1 bears the user group A, the user group D, and the user group E, the service unit 2 bears the user group B, the user group D, and the user group F, and only service copies corresponding to a same user group (the service unit D) are deployed on the service unit 1 and the service unit 2.

In embodiments of this application, the resource deployment policy of the target service can be determined based on the service configuration information and the number of service copies that are of the target service and that are entered by the tenant, and then the target service is deployed on the plurality of service units according to the resource deployment policy. The number of service copies is greater than or equal to 2, the resource deployment policy indicates that a service unit bears at least one user group of the tenant, every $Rf$ service units bear service copies of a same user group, and $Rf$ is the number of service copies. In other words, the service unit can provide a service for the at least one user group of the tenant, and each user group can be borne by at least two service units. In this case, for any user in any user group, even if a service unit that bears the user is faulty, the user can alternatively obtain a corresponding service from another service unit. In comparison with a method in which users served by a service unit cannot normally obtain a service because the service unit is faulty, according to the method provided in embodiments of this application, a redundancy capability of the target service can be effectively improved.

When the resource deployment policy indicates that $Rf$ service copies of a user group are respectively deployed on independent service units, and every $Rf$ service units bear service copies of at most one same user group, because every $Rf$ service units bear the service copies of the at most one same user group, for any user group of the tenant, if any service unit that bears the user group is faulty, the user group can alternatively obtain a corresponding service from another service unit. The user group cannot obtain a service only when all service units that bear the user group are faulty. In this case, normal running of the target service is affected. However, because other user groups borne by the service unit that bears the user group are further borne by another service unit, even if all the service units that bear the user group are faulty, the other user groups can alternatively obtain services from the another service unit. A maximum number of resources indicates an upper limit of resources occupiable by the target service, a service performance parameter indicates a lower limit of performance of the target service, and a maximum explosion radius indicates a lower limit of a redundancy capability of the target service. Therefore, based on a resource deployment constraint condition, it can be ensured that resources occupied by the target service does not exceed the maximum number of resources, the performance of the target service is not lower than the service performance parameter, and the redundancy capability of the target service is better than or equal to the redundancy capability indicated by the maximum explosion radius. In other words, in embodiments of this application, under the constraint of the resource deployment constraint condition, the determined resource deployment policy of the target service can consider service performance, the redundancy capability, and resource costs of the target service, so that the target service can have a smaller explosion radius and better performance in comparison with a related technology when the maximum number of resources remains unchanged. Because risk feature information indicates a feature that easily causes a service fault, a user that easily causes a service problem, that is, a risky user, can be accurately determined from a plurality of users based on risk feature information of the plurality of users, and then user groups to which the risky user and regular users belong are separately determined. In this way, the risky user and the regular users can be grouped into different user groups, to avoid impact of the risky user on the regular users to a maximum extent, and effectively improve quality of service of the target service for the regular users.

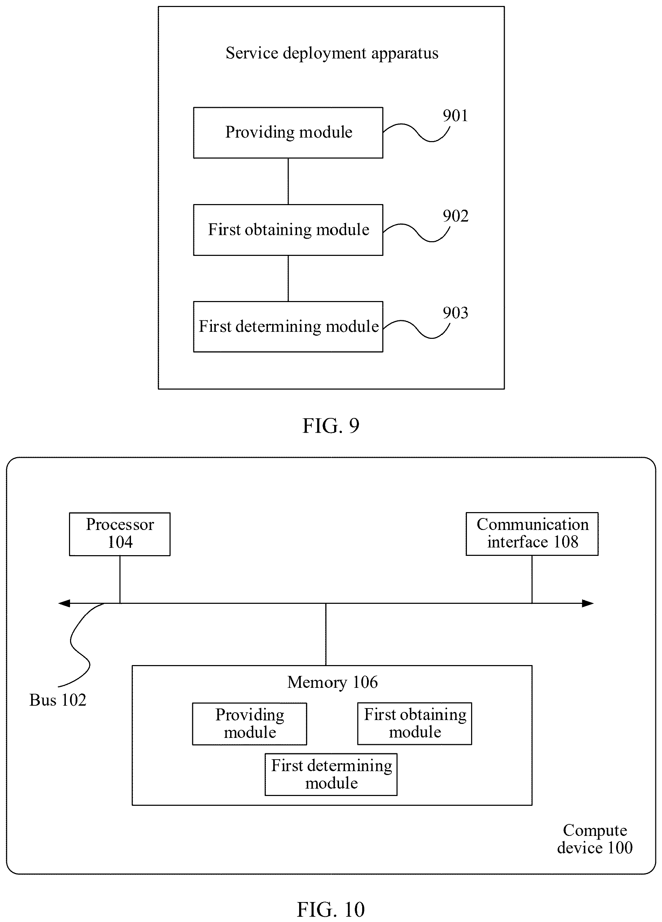

FIG. 9 is a diagram of a structure of a service deployment apparatus according to an embodiment of this application. The service deployment apparatus is included in a cloud management platform. In other words, the service deployment apparatus may be implemented as a part or all of the foregoing cloud management platform by software, hardware, or a combination thereof. Refer to FIG. 9. The apparatus includes: a providing module 901, a first obtaining module 902, and a first determining module 903.

The providing module 901 is configured to provide a configuration interface, where the configuration interface indicates a tenant to enter service configuration information of a to-be-deployed target service, and the service configuration information is used to configure the target service. For a detailed implementation process, refer to corresponding content in the foregoing embodiments. Details are not described herein again.

The first obtaining module 902 is configured to obtain the service configuration information from the configuration interface. For a detailed implementation process, refer to corresponding content in the foregoing embodiments. Details are not described herein again.

The first determining module 903 is configured to: determine a resource deployment policy of the target service based on the service configuration information and a number of service copies, and deploy the target service on a plurality of service units according to the resource deployment policy, where the resource deployment policy indicates that one service unit bears at least one user group of the tenant, every $Rf$ service units bear service copies of a same user group, $Rf$ is the number of service copies, and $Rf \geq 2$. For a detailed implementation process, refer to corresponding content in the foregoing embodiments. Details are not described herein again.

Optionally, the resource deployment policy indicates that $Rf$ service copies of the user group are respectively deployed on independent service units, and every $Rf$ service units bear service copies of at most one same user group.

Optionally, the resource deployment policy includes a number and a deployment specification of the service units, and the first determining module 903 is specifically configured to:

determine the number and the deployment specification of the service units based on the service configuration information, the number of service copies, and a resource deployment constraint condition, where the resource deployment constraint condition includes one or more of the following: a minimum number of startup nodes of a microservice, a minimum startup specification of the microservice, a maximum number of resources, a service performance parameter, a maximum explosion radius, the number of service copies, or a performance baseline of the microservice; and the maximum number of resources indicates an upper limit of resources occupiable by the target service, the service performance parameter indicates a lower limit of performance of the target service, the maximum explosion radius indicates a lower limit of a redundancy capability of the target service, and the performance baseline indicates a correspondence between a performance parameter and each of a startup specification and a number of startup nodes of the microservice.

Optionally, the first determining module 903 is specifically configured to:

determine a plurality of candidate resource deployment policies based on the service configuration information, the number of service copies, and the resource deployment constraint condition, where the candidate resource deployment policy includes a candidate number and a candidate deployment specification of service units; and select a candidate resource deployment policy from the plurality of candidate resource deployment policies, and use a candidate number and a candidate deployment specification that are of service units and that are included in the selected candidate resource deployment policy as the number and the deployment specification that are of the service units and that are included in the resource deployment policy of the target service.

Optionally, the candidate deployment specification includes a number of startup nodes and a startup specification that respectively correspond to at least one microservice used to provide the target service, and the resource deployment constraint condition satisfies the following inequality:

$$\begin{cases} \min num_i \leq num_i \\ \min s_i \leq s_i \\ s_i num_i \leq S \\ \sum_{i=1}^{n} s_i num_i \leq \dfrac{S}{N} \\ \min t(j) \geq \dfrac{T}{N} \\ B \geq \dfrac{1}{C_N^{Rf}} \end{cases} \qquad num_i \in X_i, s_i \in X_i, j \in 1,\ldots,n$$

$i$ indicates an $i^{th}$ microservice, min $hum_i$ indicates a minimum number of startup nodes of the $i^{th}$ microservice, $num_i$ indicates a number of startup nodes of the $i^{th}$ microservice in the candidate deployment specification, min $s_i$ indicates a minimum startup specification of the $i^{th}$ microservice, $s_i$ indicates a startup specification of the $i^{th}$ microservice in the candidate deployment specification, S indicates the maximum number of resources, $n$ indicates a number of the at least one microservice, $N$ indicates the candidate number, min $t(j)$ indicates a minimum performance parameter corresponding to a startup specification and a number of startup nodes of a $j^{th}$ microservice in the candidate deployment specification, $T$ indicates the service performance parameter, $B$ indicates the maximum explosion radius, $Rf$ indicates the number of service copies, and $X_i$ indicates a performance baseline of the $i^{th}$ microservice.

Optionally, the service configuration information includes an explosion radius weight and a resource weight.

The first determining module 903 is specifically configured to:

select the candidate resource deployment policy from the plurality of candidate resource deployment policies based on the explosion radius weight and the resource weight.

Optionally, the apparatus further includes:

a second obtaining module, configured to obtain user feature information, where the user feature information is feature information of a plurality of users in user groups of the tenant, the feature information includes risk feature information, and the risk feature information indicates a feature that easily causes a service fault;
a second determining module, configured to determine at least one risky user from the plurality of users based on the risk feature information of the plurality of users;
a first grouping module, configured to group the at least one risky user to obtain a risky user group to which the at least one risky user separately belongs; and
a second grouping module, configured to group regular users based on feature information of the regular users in the plurality of users, to obtain regular user groups to which the regular users separately belong, where the regular users are users in the plurality of users except the risky user.

Optionally the resource deployment policy includes the number of the service units.

The apparatus further includes:

a third determining module, configured to determine a number of user groups based on the number of the service units and the number of service copies.

The second grouping module is specifically configured to:

group the regular users based on a number of risky user groups, the number of user groups, and the feature information of the regular users.

Optionally, the second grouping module is specifically configured to:

determine feature vectors of the regular users based on the feature information of the regular users;
cluster the regular users based on the feature vectors of the regular users, to obtain a plurality of regular user clusters; and
determine, based on the plurality of regular user clusters and a number of regular user groups, the regular user groups to which the regular users separately belong, where the number of regular user groups is a difference between the number of user groups and the number of risky user groups.

Optionally, the number of service copies is entered by the tenant on the configuration interface.

Optionally, the apparatus further includes:

a display module, configured to display a service deployment suggestion interface, where the service deployment suggestion interface is used to display the resource deployment policy of the target service.

Optionally, the service deployment suggestion interface is further used to display at least one of a resource consumption status and an actual explosion radius, the resource consumption status indicates a number of resources occupied by the resource deployment policy, and the actual explosion radius indicates the redundancy capability of the target service deployed according to the resource deployment policy.

Optionally, the service deployment suggestion interface further indicates the tenant to trigger a service deployment request, and the apparatus further includes:

a receiving module, configured to receive the service deployment request, where the service deployment request indicates the cloud management platform to deploy the target service according to the resource deployment policy displayed on the service deployment suggestion interface.

In embodiments of this application, the resource deployment policy of the target service can be determined based on the service configuration information and the number of service copies that are of the target service and that are entered by the tenant, and then the target service is deployed on the plurality of service units according to the resource deployment policy. The number of service copies is greater than or equal to 2, the resource deployment policy indicates that a service unit bears at least one user group of the tenant, every $Rf$ service units bear service copies of a same user group, and $Rf$ is the number of service copies. In other words, the service unit can provide a service for the at least one user group of the tenant, and each user group can be borne by at least two service units. In this case, for any user in any user group, even if a service unit that bears the user is faulty, the user can alternatively obtain a corresponding service from another service unit. In comparison with a method in which users served by a service unit cannot normally obtain a service because the service unit is faulty, according to the method provided in embodiments of this application, a redundancy capability of the target service can be effectively improved.

When the resource deployment policy indicates that $Rf$ service copies of the user group are respectively deployed on independent service units, and every $Rf$ service units bear the service copies of the at most one same user group, because every $Rf$ service units bear the service copies of the at most one same user group, for any user group of the tenant, if any service unit that bears the user group is faulty, the user group can alternatively obtain a corresponding service from another service unit. The user group cannot obtain a service only when all service units that bear the user group are faulty. In this case, normal running of the target service is affected. However, because other user groups borne by the service unit that bears the user group are further borne by another service unit, even if all the service units that bear the user group are faulty, the other user groups can alternatively obtain services from the another service unit. The maximum number of resources indicates the upper limit of the resources occupiable by the target service, the service performance parameter indicates the lower limit of the performance of the target service, and the maximum explosion radius indicates the lower limit of the redundancy capability of the target service. Therefore, based on the resource deployment constraint condition, it can be ensured that resources occupied by the target service does not exceed the maximum number of resources, the performance of the target service is not lower than the service performance parameter, and the redundancy capability of the target service is better than or equal to the redundancy capability indicated by the maximum explosion radius. In other words, in embodiments of this application, under the constraint of the resource deployment constraint condition, the determined resource deployment policy of the target service can consider service performance, the redundancy capability, and resource costs of the target service, so that the target service can have a smaller explosion radius and better performance in comparison with a related technology when the maximum number of resources remains unchanged. Because the risk feature information indicates a feature that easily causes a service fault, a user that easily causes a service problem, that is, a risky user, can be accurately determined from the plurality of users based on the risk feature information of the plurality of users, and then user groups to which the risky user and the regular users belong are separately determined. In this way, the risky user and the regular users can be grouped into different user groups, to avoid impact of the risky user on the regular users to a maximum extent, and effectively improve quality of service of the target service for the regular users.

It should be noted that, when the service deployment apparatus provided in the foregoing embodiment deploys a service, division of the foregoing function modules is merely used as an example for description. In actual application, the foregoing functions may be allocated to different function modules for implementation as needed, that is, an internal structure of the apparatus is divided into different function modules, to implement all or a part of the functions described above. In addition, the service deployment apparatus embodiment provided in the foregoing embodiments belongs to the same idea as the service deployment method embodiment. For a detailed implementation process, refer to the method embodiment. Details are not described herein again.

The providing module, the first obtaining module, and the first determining module in the service deployment apparatus shown in FIG. 9 may all be implemented by software, hardware, or a combination of software and hardware. The following uses the providing module in the service deployment apparatus as an example to describe an implementation of the providing module. Similarly, for implementations of the foregoing other modules, refer to the implementation of the providing module.

The module is used as an example of a software functional unit, and the providing module may include code run on a computing instance. The computing instance may include at least one of a physical host, a virtual machine, and a container. Further, there may be one or more computing instances. For example, the providing module may include code run on a plurality of hosts/virtual machines/containers. It should be noted that, the plurality of hosts/virtual machines/-containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same VPC, or may be distributed in a plurality of virtual private clouds (virtual private clouds, VPCs). Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the providing module may include at least one compute device, for example, a server. Alternatively, the providing module may be a device implemented by an application-specific integrated circuit (application-specific integrated circuit, ASIC) or a programmable logic device (programmable logic device, PLD), or the like. The PLD may be implemented by a complex programmable logical device (complex programmable logical device, CPLD), a field-programmable gate array (field-programmable gate array, FPGA), generic array logic (generic array logic, GAL), or any combination thereof.

A plurality of compute devices included in the providing module may be distributed in a same region, or may be distributed in different regions. The plurality of compute devices included in the providing module may be distributed in a same AZ, or may be distributed in different AZs. Similarly, the plurality of compute devices included in the providing module may be distributed in a same VPC, or may be distributed in a plurality of VPCs. The plurality of compute devices may be any combination of compute devices such as a server, an ASIC, a PLD, a CPLD, an FPGA, and GAL.

In another embodiment, the providing module in the service deployment apparatus may be configured to perform any step in the foregoing service deployment method, the first obtaining module in the service deployment apparatus may be configured to perform any step in the foregoing service deployment method, the first determining module in the service deployment apparatus may be configured to perform any step in the foregoing service deployment method. Steps responsible for implementation by the providing module, the first obtaining module, and the first determining module in the service deployment apparatus may be specified based on a requirement, and the providing module, the first obtaining module, and the first determining module in the service deployment apparatus separately implement different steps in the foregoing service deployment method, so that all functions of the service deployment apparatus are implemented.

An embodiment of this application further provides a compute device 100. As shown in FIG. 10, the compute device 100 includes a bus 102, a processor 104, a memory 106, and a communication interface 108. The processor 104, the memory 106, and the communication interface 108 communicate with each other through the bus 102. The compute device 100 may be a server or a terminal device. It should be understood that numbers of processors and memories in the compute device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10. However, it does not mean that there is only one bus or only one type of bus. The bus 102 may include a path for information transfer between components (for example, the memory 106, the processor 104, and the communication interface 108) of the compute device 100.

The processor 104 may include any one or more of processors such as a central processing unit (central processing unit, CPU), a graphics processing unit (graphics processing unit, GPU), a microprocessor (microprocessor, MP), a digital signal processor (digital signal processor, DSP), and an integrated circuit. The integrated circuit is, for example, an ASIC, a PLD, or a combination thereof. Optionally, the PLD is a CPLD, an FPGA, GAL, or any combination thereof.

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD), or any other medium that can be configured to carry or store expected program code in a form of an instruction or a data structure and that can be accessed by a computer, but is not limited thereto. The memory 106 exists independently, and is connected to the processor 104 through the bus 102, or the memory 106 is integrated with the processor 104.

The memory 106 stores executable program code, and the processor 104 executes the executable program code to implement the foregoing service deployment method. In other words, the memory 106 stores instructions used to perform the service deployment method.

For example, the memory 106 stores executable code, and the processor 104 executes the executable code to implement functions of the providing module, the first obtaining module, and the first determining module that are shown in FIG. 9. In other words, the memory 106 stores instructions used to perform the service deployment method provided in embodiments of this application.

The communication interface 108 implements communication between the compute device 100 and another device or a communication network via a transceiver module, for example, but not limited to a network interface card or a transceiver. The network interface includes a wired communication interface, or further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a compute device cluster. The compute device cluster includes a plurality of compute devices. The compute device may be a server, for example, a central server, an edge server, or a local server in a local data center. In some embodiments, the compute device may alternatively be a terminal device like a desktop computer, a notebook computer, or a smartphone.

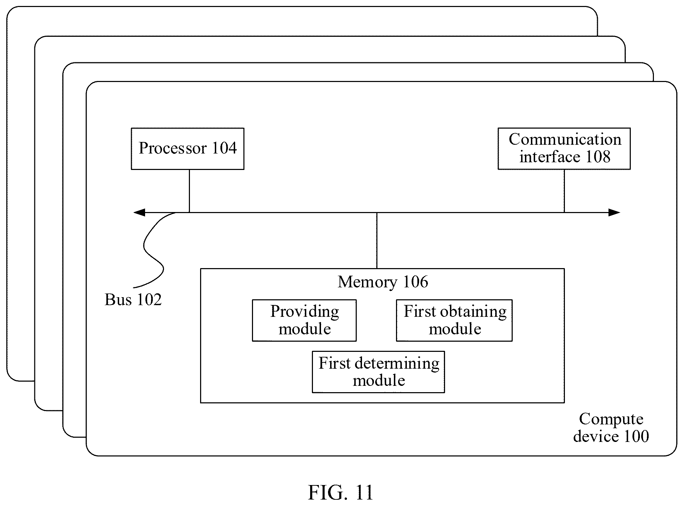

As shown in FIG. 11, the compute device cluster includes a plurality of compute devices 100. Memories 106 in the plurality of compute devices 100 in the compute device cluster may store same instructions used to perform the foregoing service deployment method.

In some possible implementations, the memories 106 in the plurality of compute devices 100 in the compute device cluster may alternatively separately store a part of the instructions used to perform the foregoing service deployment method. In other words, a combination of the plurality of compute devices 100 may jointly execute all the instructions used to perform the foregoing service deployment method.

It should be noted that memories 106 in different compute devices 100 in the compute device cluster may store different instructions, to perform some functions of the foregoing service deployment method. In other words, instructions stored in memories 106 in different compute devices 100 may implement functions of some or all modules included in the foregoing service deployment apparatus.

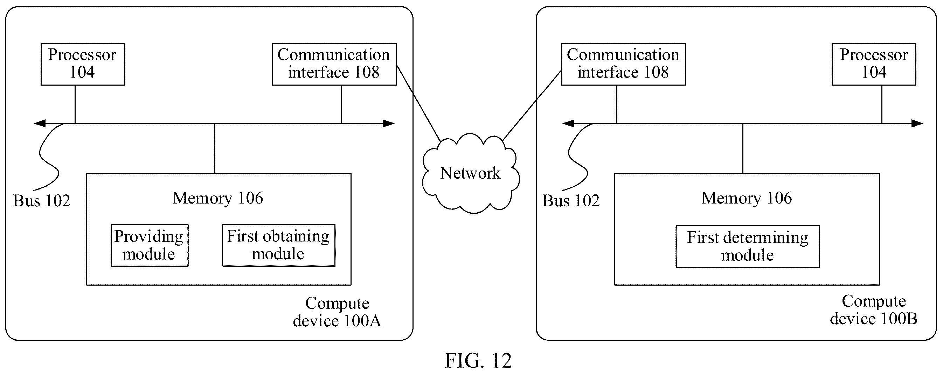

In some possible implementations, one or more compute devices in the compute device cluster may be connected over a network. The network may be a wide area network, a local area network, or the like. FIG. 12 shows a possible implementation. As shown in FIG. 12, two compute devices 100A and 100B are connected over a network. Specifically, the compute devices are connected to the network through communication interfaces of the compute devices. In such a possible implementation, a memory 106 in the compute device 100A stores instructions used to perform functions of some modules included in the foregoing service deployment apparatus. In addition, a memory 106 in the compute device 100B stores instructions used to perform functions of the other modules included in the foregoing service deployment apparatus.

It should be understood that functions of the compute device 100A shown in FIG. 12 may alternatively be implemented by a plurality of compute devices 100. Similarly, functions of the compute device 100B may alternatively be implemented by a plurality of compute devices 100.

An embodiment of this application further provides another compute device cluster. For a connection relationship between compute devices in the compute device cluster, refer to connection manners of the compute device cluster in FIG. 11 and FIG. 12 similarly. A difference is that a memory 106 or memories 106 in one or more compute devices 100 in the compute device cluster may store same instructions used to perform the service deployment method.

In some possible implementations, the memory 106 or the memories 106 in the one or more compute devices 100 in the compute device cluster may alternatively separately store a part of the instructions used to perform the service deployment method. In other words, a combination of the one or more compute devices 100 may jointly execute instructions used to perform the service deployment method.

An embodiment of this application further provides a computer-readable storage medium. The storage medium stores instructions. When the instructions are run on a computer device cluster, the computer is enabled to perform the steps of the service deployment method in the foregoing embodiments.

An embodiment of this application further provides a computer program product including instructions. When the instructions are run on a computer device cluster, the computer device cluster is enabled to perform the steps of the service deployment method in the foregoing embodiments. In other words, a computer program is provided. When the computer program runs on a computer device cluster, the computer device cluster is enabled to perform the steps of the service deployment method in the foregoing embodiments.

All or some of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a data subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state drive, SSD)), or the like. It should be noted that the computer-readable storage medium mentioned in embodiments of this application may be a non-volatile storage medium, that is, may be a non-transitory storage medium.

It should be understood that "a plurality of" mentioned in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a number or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and a signal in embodiments of this application are used under authorization by the user or full authorization by all parties, and collection, use, and processing of related data need to conform to related laws, regulations, and standards of related countries and regions. For example, the service configuration information of the target service in embodiments of this application is obtained under full authorization.

The foregoing descriptions are merely embodiments of this application, but are not intended to limit this application. Any modification, equivalent replacement, or improvement made without departing from the spirit and principle of this application should fall within the protection scope of this application.

**Claims**

1. A service deployment method, applied to a cloud management platform, wherein the cloud management platform is configured to manage a cloud infrastructure, the cloud infrastructure comprises at least one cloud data center, a plurality of service units are deployed in the at least one cloud data center, and the method comprises:

   providing a configuration interface, wherein the configuration interface indicates a tenant to enter service configuration information of a to-be-deployed target service, and the service configuration information is used to configure the target service;
   obtaining the service configuration information from the configuration interface; and
   determining a resource deployment policy of the target service based on the service configuration information and a number of service copies, and deploying the target service on the plurality of service units according to the resource deployment policy, wherein the resource deployment policy indicates that one service unit bears at least one user group of the tenant, every $Rf$ service units bear service copies of a same user group, $Rf$ is the number of service copies, and $Rf \geq 2$.

2. The method according to claim 1, wherein the resource deployment policy indicates that $Rf$ service copies of the user group are respectively deployed on independent service units, and every $Rf$ service units bear service copies of at most one same user group.

3. The method according to claim 1 or 2, wherein the resource deployment policy comprises a number and a deployment specification of the service units, and the determining the resource deployment policy of the target service based on the service configuration information and the number of service copies comprises:
   determining the number and the deployment specification of the service units based on the service configuration information, the number of service copies, and a resource deployment constraint condition, wherein the resource deployment constraint condition comprises one or more of the following: a minimum number of startup nodes of a microservice, a minimum startup specification of the microservice, a maximum number of resources, a service performance parameter, a maximum explosion radius, the number of service copies, or a performance baseline of the microservice; and the maximum number of resources indicates an upper limit of resources occupiable by the target service, the service performance parameter indicates a lower limit of performance of the target service, the maximum explosion radius indicates a lower limit of a redundancy capability of the target service, and the performance baseline indicates a correspondence between a performance parameter and each of a startup specification and a number of startup nodes of the microservice.

4. The method according to claim 3, wherein the determining the number and the deployment specification of the service units based on the service configuration information, the number of service copies, and the resource deployment constraint condition comprises:

determining a plurality of candidate resource deployment policies based on the service configuration information, the number of service copies, and the resource deployment constraint condition, wherein the candidate resource deployment policy comprises a candidate number and a candidate deployment specification of the service units; and
selecting a candidate resource deployment policy from the plurality of candidate resource deployment policies, and using a candidate number and a candidate deployment specification that are of the service units and that are comprised in the selected candidate resource deployment policy as the number and the deployment specification that are of the service units and that are comprised in the resource deployment policy of the target service.

5. The method according to claim 4, wherein the candidate deployment specification comprises a number of startup nodes and a startup specification that respectively correspond to at least one microservice used to provide the target service, and the resource deployment constraint condition satisfies the following inequality:

$$
\begin{cases}
\min num_i \leq num_i \\
\min s_i \leq s_i \\
s_i num_i \leq S \\
\sum_{i=1}^{n} s_i num_i \leq \dfrac{S}{N} \\
\min t(j) \geq \dfrac{T}{N} \\
B \geq \dfrac{1}{C_N^{Rf}}
\end{cases}
\qquad num_i \in X_i, s_i \in X_i, j \in 1, \ldots, n
$$

wherein $i$ indicates an $i^{th}$ microservice, $\min num_i$ indicates a minimum number of startup nodes of the $i^{th}$ microservice, $num_i$ indicates a number of startup nodes of the $i^{th}$ microservice in the candidate deployment specification, $\min s_i$ indicates a minimum startup specification of the $i^{th}$ microservice, $s_i$ indicates a startup specification of the $i^{th}$ microservice in the candidate deployment specification, S indicates the maximum number of resources, $n$ indicates a number of the at least one microservice, $N$ indicates the candidate number, $\min t(j)$ indicates a minimum performance parameter corresponding to a startup specification and a number of startup nodes of a $j^{th}$ microservice in the candidate deployment specification, $T$ indicates the service performance parameter, $B$ indicates the maximum explosion radius, $Rf$ indicates the number of service copies, and $X_i$ indicates a performance baseline of the $i^{th}$ microservice.

6. The method according to claim 4, wherein the service configuration information comprises an explosion radius weight and a resource weight; and
the selecting the candidate resource deployment policy from the plurality of candidate resource deployment policies comprises:
selecting the candidate resource deployment policy from the plurality of candidate resource deployment policies based on the explosion radius weight and the resource weight.

7. The method according to any one of claims 1 to 6, wherein the method further comprises:

obtaining user feature information, wherein the user feature information is feature information of a plurality of users in user groups of the tenant, the feature information comprises risk feature information, and the risk feature information indicates a feature that easily causes a service fault;

determining at least one risky user from the plurality of users based on the risk feature information of the plurality of users;

grouping the at least one risky user to obtain a risky user group to which the at least one risky user separately belongs; and

grouping regular users based on feature information of the regular users in the plurality of users, to obtain regular user groups to which the regular users separately belong, wherein the regular users are users in the plurality of users except the risky user.

8. The method according to claim 7, wherein the resource deployment policy comprises the number of the service units; the method further comprises:

determining a number of user groups based on the number of the service units and the number of service copies; and

the grouping the regular users based on the feature information of the regular users in the plurality of users comprises:

grouping the regular users based on a number of risky user groups, the number of user groups, and the feature information of the regular users.

9. The method according to claim 8, wherein the grouping the regular users based on the number of risky user groups, the number of user groups, and the feature information of the regular users comprises:

determining feature vectors of the regular users based on the feature information of the regular users;

clustering the regular users based on the feature vectors of the regular users, to obtain a plurality of regular user clusters; and

determining, based on the plurality of regular user clusters and a number of regular user groups, the regular user groups to which the regular users separately belong, wherein the number of regular user groups is a difference between the number of user groups and the number of risky user groups.

10. The method according to any one of claims 1 to 9, wherein the number of service copies is entered by the tenant on the configuration interface.

11. The method according to any one of claims 1 to 10, wherein after determining the resource deployment policy of the target service based on the service configuration information and the number of service copies, the method further comprises:

displaying a service deployment suggestion interface, wherein the service deployment suggestion interface is used to display the resource deployment policy of the target service.

12. The method according to claim 11, wherein the service deployment suggestion interface is further used to display at least one of a resource consumption status and an actual explosion radius, the resource consumption status indicates a number of resources occupied by the resource deployment policy, and the actual explosion radius indicates the redundancy capability of the target service deployed according to the resource deployment policy.

13. The method according to claim 11 or 12, wherein the service deployment suggestion interface further indicates the tenant to trigger a service deployment request, and before deploying the target service on the plurality of service units according to the resource deployment policy, the method further comprises:

receiving the service deployment request, wherein the service deployment request indicates the cloud management platform to deploy the target service according to the resource deployment policy displayed on the service deployment suggestion interface.

14. A service deployment apparatus, wherein the service deployment apparatus is comprised in a cloud management platform, the cloud management platform is configured to manage a cloud infrastructure, the cloud infrastructure comprises at least one cloud data center, a plurality of service units are deployed in the at least one cloud data center, and the apparatus comprises:

a providing module, configured to provide a configuration interface, wherein the configuration interface indicates a tenant to enter service configuration information of a to-be-deployed target service, and the service configuration information is used to configure the target service;

a first obtaining module, configured to obtain the service configuration information from the configuration interface; and

a first determining module, configured to: determine a resource deployment policy of the target service based on the service configuration information and a number of service copies, and deploy the target service on the plurality of service units according to the resource deployment policy, wherein the resource deployment policy indicates that one service unit bears at least one user group of the tenant, every $Rf$ service units bear service copies of a same user group, $Rf$ is the number of service copies, and $Rf \geq 2$.

15. The apparatus according to claim 14, wherein the resource deployment policy indicates that $Rf$ service copies of the user group are respectively deployed on independent service units, and every $Rf$ service units bear service copies of at most one same user group.

16. The apparatus according to claim 14 or 15, wherein the apparatus further comprises:

a second obtaining module, configured to obtain user feature information, wherein the user feature information is feature information of a plurality of users in user groups of the tenant, the feature information comprises risk feature information, and the risk feature information indicates a feature that easily causes a service fault;

a second determining module, configured to determine at least one risky user from the plurality of users based on the risk feature information of the plurality of users;

a first grouping module, configured to group the at least one risky user to obtain a risky user group to which the at least one risky user separately belongs; and

a second grouping module, configured to group regular users based on feature information of the regular users in the plurality of users, to obtain regular user groups to which the regular users separately belong, wherein the regular users are users in the plurality of users except the risky user.

17. The apparatus according to claim 16, wherein the resource deployment policy comprises a number of the service units;

the apparatus further comprises:

a third determining module, configured to determine a number of user groups based on the number of the service units and the number of service copies; and

the second grouping module is specifically configured to:

group the regular users based on a number of risky user groups, the number of user groups, and the feature information of the regular users.

18. The apparatus according to any one of claims 14 to 17, wherein the number of service copies is entered by the tenant on the configuration interface.

19. The apparatus according to any one of claims 14 to 18, wherein the apparatus further comprises:
a display module, configured to display a service deployment suggestion interface, wherein the service deployment suggestion interface is used to display the resource deployment policy of the target service.

20. A compute device cluster, wherein the compute device cluster comprises at least one compute device, and each compute device comprises a processor and a memory; and
the processor of the at least one compute device is configured to execute instructions stored in the memory of the at least one compute device, to enable the compute device cluster to perform the method according to any one of claims 1 to 13.

21. A computer-readable storage medium, wherein the storage medium comprises computer program instructions; and when the computer program instructions are executed by a compute device cluster, the compute device cluster performs the method according to any one of claims 1 to 13.

22. A computer program product comprising instructions, wherein when the instructions are run by a compute device cluster, the compute device cluster is enabled to perform the method according to any one of claims 1 to 13.

FIG. 1

FIG. 2

Service configuration information

User feature information

Resource planning unit 301

User grouping unit 305

Resource deployment policy

User grouping policy

Service deployment suggestion unit 306

Performance of a target service

Deployment unit 302

User traffic data

Service unit 303

Monitoring unit 304

FIG. 3

Provide a configuration interface — 401

Obtain service configuration information of a target service from the configuration interface — 402

Determine a resource deployment policy of the target service based on the service configuration information and a number of service copies of the target service, and deploy the target service on a plurality of service units according to the resource deployment policy — 403

FIG. 4

Service performance parameter | 5000 QPS

Explosion radius weight | 90

Maximum explosion radius | 0.1

Resource weight | 10

Maximum number of resources | 800U 3200G 100T

Microservice 1

Name | API microservice

Minimum startup specification | 4U 8G 50G

Minimum number of startup nodes | 1

Performance baseline | API.excel

Microservice 2

Name | DB microservice

Minimum startup specification | 16U 64G 500G

Minimum number of startup nodes | 2

Performance baseline | DB.excel

## Startup specification ## Number of startup nodes ## Performance parameter
## 4U 8G 50G ## 1 ## 100 QPS
## 4U 8G 50G ## 5 ## 600 QPS
## 4U 8G 50G ## 10 ## 1600 QPS
## 4U 8G 50G ## 20 ## 2800 QPS
## 8U 16G 100G ## 1 ## 500 QPS
## 8U 16G 100G ## 5 ## 1800 QPS
## 8U 16G 100G ## 10 ## 5000 QPS
## 8U 16G 100G ## 20 ## 6800 QPS

FIG. 5

Service unit 0
(A) (B) (C)

Service unit 1
(A) (D) (E)

Service unit 2
(B) (D) (F)

Service unit 3
(C) (E) (F)

FIG. 6

Service deployment suggestion interface

Service unit 1

AZ1

API
(8U 16G 100G)

DB
(32U 128G 1000G)

DB
(32U 128G 1000G)

AZ2

API
(8U 16G 100G)

DB
(32U 128G 1000G)

DB
(32U 128G 1000G)

Service
unit 2

Same as
the
service
unit 1

...

Service
unit 5

Same as
the
service
unit 1

Resource consumption status    720U 2720G 21T
Actual explosion radius        0.1

FIG. 7

Region 1

Service unit 0

Microservice 1

Microservice 2

Ⓐ Ⓑ Ⓒ

Service unit 1

Microservice 1

Microservice 2

Ⓐ Ⓓ Ⓔ

Service unit 2

Microservice 1

Microservice 2

Ⓑ Ⓓ Ⓕ

Service unit 3

Microservice 1

Microservice 2

Ⓒ Ⓔ Ⓕ

Service
units

| A | B | C | D | E | F |

User
groups

① ⑤  ② ④  ③ ⑥  ⑦ ⑫  ⑧ ⑨  ⑩ ⑪

Users

FIG. 8

Service deployment apparatus

Providing module — 901

First obtaining module — 902

First determining module — 903

FIG. 9

Processor 104

Communication interface 108

Bus 102

Memory 106

Providing module

First obtaining module

First determining module

Compute device 100

FIG. 10

Processor 104

Communication
interface 108

Bus 102

Memory 106

Providing
module

First obtaining
module

First determining
module

Compute
device 100

FIG. 11

FIG. 12

## INTERNATIONAL SEARCH REPORT

| International application No. |
|---|
| **PCT/CN2024/077469** |

### A. CLASSIFICATION OF SUBJECT MATTER

H04L 67/51(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, CNKI, DWPI, USTXT, WOTXT, EPTXT, IEEE: 云服务, 云数据, 用户, 副本, 部署, 资源, 租户, 策略, 容灾, 组, cloud, group, duplicate, deploy, tenement, resource

### C. DOCUMENTS CONSIDERED TO BE RELEVANT

| Category* | Citation of document, with indication, where appropriate, of the relevant passages | Relevant to claim No. |
|---|---|---|
| X | CN 109327422 A (CHINA MOBILE GROUP ZHEJIANG CO., LTD. et al.) 12 February 2019 (2019-02-12)<br>description, paragraphs [0051]-[0156] | 1, 2, 10-15, 18-22 |
| A | CN 109040276 A (ZHENGZHOU YUNHAI INFORMATION TECHNOLOGY CO., LTD.) 18 December 2018 (2018-12-18)<br>entire document | 1-22 |
| A | WO 2023045552 A1 (ZTE CORP.) 30 March 2023 (2023-03-30)<br>entire document | 1-22 |

☐ Further documents are listed in the continuation of Box C.  ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **24 May 2024** | **27 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/077469** |

| Patent document cited in search report | | | Publication date (day/month/year) | Patent family member(s) | Publication date (day/month/year) |
| --- | --- | --- | --- | --- | --- |
| CN | 109327422 | A | 12 February 2019 | None | |
| CN | 109040276 | A | 18 December 2018 | None | |
| WO | 2023045552 | A1 | 30 March 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310911636

- CN 202311541864 X